(19) Europäisches Patentamt
European Patent Office
Office européen des brevets

(11) **EP 2 936 201 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(21) Anmeldenummer: **13811245.3**

(22) Anmeldetag: **20.12.2013**

(51) Int Cl.:
*G01S 17/02* (2020.01)     *G01S 7/486* (2020.01)

(86) Internationale Anmeldenummer:
**PCT/EP2013/077749**

(87) Internationale Veröffentlichungsnummer:
**WO 2014/096385 (26.06.2014 Gazette 2014/26)**

(54) **VORRICHTUNG ZUR BESTIMMUNG EINER EIGENSCHAFT EINES UEBERTRAGUNGSKANALS ZWISCHEN EINEM SENDER UND EINEM EMPFAENGER**

DEVICE FOR DETERMINING A PROPERTY OF A TRANSMISSION CHANNEL BETWEEN A TRANSMITTER AND A RECEIVER

DISPOSITIF DE DÉTERMINATION D'UNE PROPRIÉTÉ D'UN CANAL DE TRANSMISSION ENTRE UN ÉMETTEUR ET UN RÉCEPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12199090**
**30.09.2013 EP 13186587**

(43) Veröffentlichungstag der Anmeldung:
**28.10.2015 Patentblatt 2015/44**

(60) Teilanmeldung:
**19217990.1**

(73) Patentinhaber: **Elmos Semiconductor Aktiengesellschaft**
**44227 Dortmund (DE)**

(72) Erfinder:
• **BURCHARD, Bernd**
**44227 Dortmund (DE)**
• **SCHMITZ, Denis**
**44227 Dortmund (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 0 706 648     EP-A1- 2 109 018**
**DE-A1-102010 028 967     DE-B3- 10 300 223**
**US-A1- 2009 237 282**

**Beschreibung**

Die Erfindung betrifft eine Vorrichtung zur Bestimmung mindestens einer Eigenschaft und/oder einer Veränderung mindestens einer Eigenschaft eines Übertragungskanals zwischen einem Sender und einem Empfänger, wobei der Übertragungskanal optisch, kapazitiv oder induktiv ausgestaltet sein kann.

Einleitung

Aus dem Stand der Technik sind verschiedene Vorrichtungen und Verfahren bekannt, die die Vermessung eines Übertragungskanals mit Hilfe eines Senders, eines Empfängers und eines Kompensationssignalsenders ermöglichen. Exemplarisch seien hier die Systeme gemäß den Druckschriften EP-B-706 648, EP-B-1 913 420, DE-B-103 00 223 und DE-A-10 2010 028 967 genannt, mit denen z.B. die Annäherung einer Hand (oder allgemein eines Objekts) detektierbar ist. Dieses Konzept ist im Stand der Technik HALIOS® bekannt.

Den bekannten Systemen gemeinsam ist, dass sie zumindest auf der Empfangsseite einen analogen Schaltkreis erfordern. Dies hat den Nachteil, dass nicht mehr einfache digitale Zellen zur Herstellung integrierter Schaltkreise verwendet werden können, sondern nur noch eine Mischung von analogen und integrierten Schaltungselementen (siehe z.B. US-A-2009/0237282 und EP-A-2 109 018). Desweiteren hat dies zur Folge, dass nur noch Mixed-Signal-Testsysteme für die Prüfung derartiger Schaltungen eingesetzt werden können, wenn diese Schaltungen monolithisch integriert realisiert werden. Mixed-Signal-Schaltkreise sind aber erheblich empfindlicher gegenüber Prozessschwankungen des Halbleiterherstellprozesses als digitale Schaltungen. Daher besteht Bedarf an einer rein digitalen Schaltungskonzeption, die nur wenige externe diskrete Bauteile wie Kondensatoren und Widerstände benötigt.

Aufgabe der Erfindung

Die Aufgabe der hier beschriebenen Erfindung ist es, ein solches rein digitales Schaltungskonzept anzugeben. Dieses hat neben der Vermeidung der oben beschriebenen Nachteile des Stands der Technik auch den Vorteil, dass die notwendige Chipfläche so klein wird, dass die resultierenden ICs in der Regel durch die Pad-Anschlüsse dominiert werden.

Beschreibung des Grundgedankens der Erfindung

Zur Lösung dieser Aufgabe wird mit der Erfindung gemäß einer ihrer Varianten eine Vorrichtung zur Bestimmung mindestens einer Eigenschaft eines Drahtlos-Übertragungskanals zwischen einem Nutzsignalsender zum Senden eines binären Nutzsignals sowie einem Kompensationssignalsender zum Senden eines binären Kompensationssignals einerseits und einem Empfänger andererseits, wobei der Übertragungskanal eine hinsichtlich ihrer Eigenschaften zu bestimmende erste Übertragungsstrecke zwischen dem Nutzsignalsender und dem Empfänger und eine hinsichtlich ihrer Eigenschaften bekannte zweite Übertragungsstrecke zwischen dem Kompensationssignalsender und dem Empfänger aufweist und wobei der Nutzsignalsender und der Kompensationssignalsender getaktet betreibbar sind, vorgeschlagen, wobei die Vorrichtung versehen ist mit den Merkmalen des Anspruchs 1 oder alternativ des Anspruchs 7. Einzelne Ausgestaltungen der Erfindung sind Gegenstand der Unteransprüche.

Nach der Erfindung erfolgt also eine Umsetzung des analogen Signals, das der Empfänger empfängt, in ein digitales Signal. Hierzu dient ein insbesondere als Ein-Bit-Analog-Digital-Wandler ausgebildeter Analog-Digital-Wandler, der in seiner einfachsten Ausgestaltung einen Inverter mit rückgekoppeltem Tiefpassfilter und ein Hochpassfilter an seinem Eingang aufweist. Das vom Empfänger kommende Signal durchläuft also das Hochpassfilter; am Ausgang des Analog-Digital-Wandlers steht dann also abgetastet das Digitalsignal an. Zweckmäßig kann es sein, wenn der Analog-Digital-Wandler eine Abtast-Halte-Schaltung aufweist. Diese Abtast-Halte-Schaltung ist zweckmäßigerweise als Flip-Flop ausgeführt. Die Besonderheit hierbei kann nun darin bestehen, dass die Abtast-Halte-Schaltung mit einer wesentlich größeren Taktfrequenz betrieben wird, als der Digitalteil der Schaltung zur weiteren Verarbeitung des Ausgangssignals des Analog-Digital-Wandlers arbeitet. Hier hat sich als zweckmäßig erwiesen, wenn die Betriebsfrequenz der Abtast-Halte-Schaltung ein ganzzahliges Vielfaches der Taktfrequenz des Digitalteils des Gesamtsystems beträgt. Damit wird erreicht, dass Störungen mit Frequenzen, die nicht gleich dem Systemtakt sind, eliminiert werden.

Die Erfindung ist insbesondere bei Übertragungskanälen einsetzbar, die, wie es bei den Systemen der eingangs genannten Druckschriften der Fall ist, mit einem Nutzsignalsender, einem Kompensationssignalsender und einem Empfänger arbeiten. Diese Komponenten können optisch, kapazitive oder induktiv arbeiten. Der sich so bildende Übertragungskanal weist zwei Übertragungsstrecken auf, und zwar einerseits zwischen dem Nutzsignalsender und dem Empfänger und andererseits zwischen dem Kompensationssignalsender und dem Empfänger. Die Besonderheit hierbei besteht nun darin, dass die modulierten Signale, die von den beiden Sendern ausgegeben werden, um 180° phasenverschoben sind und sich somit im Empfänger ein Gleichsignal einstellt. Nach dem bekannten HALIOS®-Prinzip kann dann ermittelt werden, inwieweit sich in der ersten Übertragungsstrecke ein Objekt befindet und, wenn ja, wie weit entfernt dieses Objekt vom Empfänger ist.

Wie oben erwähnt, kann das Skalarproduktergebnissignal zur Bestimmung der Eigenschaft der zu untersuchenden Übertragungsstrecke herangezogen werden, wobei mit der Bestimmung der Eigenschaft z.B. gemeint ist, dass untersucht wird, ob sich in der Übertragungsstrecke ein Objekt (z.B. die Hand einer Person) befindet, an dem das Signal vom Sender zum Empfänger reflektiert wird. Dabei ist es erfindungsgemäß auch möglich, einen Übertragungskanal zu untersuchen, der lediglich eine einzige Übertragungsstrecke zwischen einem Nutzsignalsender und einem Empfänger aufweist, also nicht mit der zweiten Übertragungsstrecke versehen ist, wobei ein derartiges System dann vorzugsweise auch keinen Kompensationssignalsender aufweist.

Anstelle eines (klassischen) Digital-Analog-Wandlers kann auch eine PWM-Einheit eingesetzt werden.

Durch diese beiden Konstruktionen erfolgt jeweils eine digitale Verarbeitung der Signale hinter dem Analog-Digital-Wandler, und zwar auch im Rückkopplungspfad. Gleichanteile im am Eingang des Analog-Digital-Wandlers anstehenden Signal (Ausgangssignal des Empfängers) werden über den Kondensator abgeblockt und führen daher nicht zu Störungen und Verfälschungen bei der digitalen Signalverarbeitung.

Bei einer bevorzugten Ausgestaltung der Erfindung ist vorgesehen, dass der Analog-Digital-Wandler zwischen seinem Ausgang und seinem Eingang einen Rückkopplungspfad mit einem ersten Multiplizierer zur Multiplikation des Rückkopplungssignals am Ausgang mit einem ersten Faktor und mit einer Einheit zur Multiplikation des Integrals des Ausgangssignals des ersten Multiplizierers mit einem zweiten Faktor sowie zur Addition dieses Multiplikationssignals zum Rückkopplungssignal aufweist und dass ein zweiter Multiplizierer zur Multiplikation des Ergebnissignals der Addition mit einem dritten Faktor vorgesehen ist, wobei das Ausgangssignal des Digital-Analog-Wandlers das Rückkopplungssignal ist.

Insbesondere zweckmäßig ist, wenn der Analog-Digital-Wandler einen Invertierer oder einen Ein-Bit-Analog-Digital-Wandler aufweist.

Gemäß einer weiteren Ausgestaltung der Erfindung weist die Vorrichtung einen Sendesignalgenerator zur Erzeugung eines Sendesignals für den Nutzsignalsender als Referenzsignal auf, wobei das Ergebnissignal der Skalarmultiplikation über einen Kompensationssignalsender mit dem Empfänger oder auf andere Weise mit dem Eingang des Analog-Digital-Wandlers gekoppelt ist.

In weiterer zweckmäßiger Ausgestaltung der Erfindung kann ein Up-Down-Counter zur Integration des Skalarprodukts der Skalarprodukteinheit vorgesehen sein.

Schließlich kann die erfindungsgemäße Vorrichtung auch eine Kompensationssignal-Erzeugungseinheit zur Erzeugung eines Kompensationssignals aufweisen, welches mindestens einen Kompensationssignalsender steuert, der in mindestens eine zweite Übertragungsstrecke zum Empfänger sendet und sich mit dem Signal des Nutzsignalsenders im Empfänger zu einem Gleichsignal überlagert.

Wie bereits oben erwähnt, können der Nutzsignalsender und der Empfänger sowie ein eventuell existierender Kompensationssignalsender z.B. optisch, kapazitiv oder induktiv arbeiten.

Die Erfindung geht von dem Gedanken aus, dass im Gegensatz zur EP-B-706 648 die Ansteuerung der Sender (Nutz- und/oder Kompensationssignalsender) über eine PWM-Einheit erfolgen kann. Sind die Sender und oder die Empfänger genügend träge und zeigen ein hinreichendes Tiefpassverhalten oder sind sie mit einem Tiefpassfilter versehen, so können diese direkt mit einem PWM-Signal angesteuert werden. Falls notwendig, kann dies beispielsweise durch Kombination mit einem RC-Tiefpass erreicht werden.

Hierdurch senden die Sender im Wesentlichen ein niederfrequentes Signal. Gleiches kann für die Empfänger gelten, die so träge gewählt werden, dass sie die PWM-Signale nicht mehr durchlassen. Entscheidend ist, dass die Wirkungskette aus Sender und Empfänger diese Trägheit aufweist.

Besonders vorteilhaft ist es, wenn das PWM-Signal für jede Einstellgröße so gewählt wird, dass die niederfrequenten Oberwellen der PWM-Signale möglichst schwach und die hochfrequenten Anteile möglichst hoch ausgeprägt sind. Letztere werden durch die Filterwirkung der Tiefpasscharakteristik der Sender- und Empfängerstufen besonders gut herausgefiltert. Dies wird später erläutert.

Die Erfindung wurde vorstehend anhand der Variante beschrieben, bei der die zu überwachende bzw. hinsichtlich ihrer Eigenschaften zu bestimmende Übertragungsstrecke diejenige zwischen dem Nutzsignalsender und dem Empfänger ist. Es ist aber erfindungsgemäß ebenso möglich, dass die zu untersuchende Übertragungsstrecke zwischen dem Kompensationssignalsender und dem Empfänger liegt, womit, bezogen auf die oben beschriebene Variante, der Kompensationssignalsender insoweit die Funktion eines Nutzsignalsenders und der Nutzsignalsender die Funktion eines Kompensationssignalsenders übernimmt.

Wie bereits oben erwähnt, ist also Wesensmerkmal der Erfindung der Analog-Digital-Wandler am Eingang des Systems zur Verarbeitung des vom Empfänger kommenden Signals. Dieser Analog-Digital-Wandler, der grundsätzlich auch in anderem schaltungstechnischen Zusammenhang betrieben werden kann, was ebenfalls Gegenstand der Erfindung ist, weist einen Eingang und einen Ausgang auf und ist versehen mit

- einem Inverter mit einem Invertereingang und einem Inverterausgang, zwischen denen ein Rückkopplungspfad mit einem Tiefpassfilter existiert, und
- einem Hochpassfilter in einem Einkoppelpfad zum Invertereingang.

Hierbei kann es zweckmäßig sein, wenn ferner eine Abtast-Halte-Schaltung mit einem Ansteuertakt vorgesehen ist, der ein Mehrfaches des Betriebstakts einer Digitalschaltung beträgt, in der das am Ausgang des Analog-Digital-Wandlers anstehende Ausgangssignal bearbeitet wird.

Es sei an dieser Stelle hervorgehoben, dass die zuvor beschriebenen Funktionen, Ansteuerungen und Signalverbindungen des Nutzsignalsenders und des Kompensationssignalsenders alternativ auch gegeneinander vertauschbar sind.

Die Erfindung wird nachfolgend anhand der Zeichnung näher erläutert. Im Einzelnen zeigen dabei:

Fig. 1          ein Blockschaltbild der Gesamtschaltung,
Fig. 2          ein beispielhaftes Taktschema für ein 3-Bit PWM-Schema zur vereinfachten Darstellung ,
Fig. 3          ein Blockschaltbild einer Einheit zur Bestimmung des Fourier-Koeffizienten und zur Rücktransformation,
Fig. 4          ein Blockschaltbild zweier kombinierter Einheiten gemäß Fig. 3,
Fig. 5          eine Kombination von n Einheiten gemäß Fig. 3 mit einer PWM-Einheit,
Fig. 6          eine Kombination von n Einheiten gemäß Fig. 3 mit einem DAC,
Fig. 7          ein Blockdiagramm gemäß Fig. 3 in Kombination mit einer PWM-Einheit hinter den UND-Gattern,
Fig. 8          ein Blockdiagramm gemäß Fig. 5 in Kombination mit einer PWM-Einheit vor dem einzelnen UND-Gatter,
Fig. 9          ein Blockschaltbild gemäß Fig. 1 mit Ersatz diverser Funktionsblöcke durch den Block 39 gemäß Fign. 7 und 8,
Fig. 10         ein alternatives Blockschaltbild für das Gesamtsystem,
Fig. 11         eine weitere alternative Schaltung für das Gesamtsystem,
Fig. 12         das Gesamtsystem ohne Kompensationssignalsender als Blockschaltdiagramm,
Fig. 13         eine alternativ Blockschaltbilddarstellung des Gesamtsystems,
Fig. 14         die Eingangsstufe des Gesamtsystems,
Fig. 15         eine Darstellung der Eingangsstufe des Gesamtsystems in Form eines Signalfolgediagramms,
Fig. 16         eine Darstellung der Eingangsstufe des Gesamtsystems in Form eines Signalfolgediagramms,
Fig. 17         eine Blockschaltbilddarstellung als Signallauf einer Schaltung nach dem Stand der Technik,
Fign. 18 bis 20 Darstellungen einer erfindungsgemäßen Schaltung gemäß zweier weiterer Ausgestaltungen zur Verdeutlichung der Erfindung im Allgemeinen und
Fig. 21         der bekannte Messsystem-Regelkreis, von dem erfindungsgemäß ausgegangen und eine digitale Schaltungsvariante vorgeschlagen wird.

Bevor die Erfindung im Einzelnen erläutert wird, soll zuvor kurz auf das aus den eingangs genannten Schriften bekannte Messprinzip eingegangen werden. Bei diesem Messprinzip handelt es sich dabei in erster Linie um ein optoelektronisches Messsystem mit einer extrem hohen Störsicherheit gegenüber Fremdlicht. Die Grundschaltung weist zwei Infrarot-Sendedioden, nämlich einen Nutzsignalsender und einen Kompensationssignalsender, eine Fotodiode als Empfänger für das Nutzsignal (nach Reflektion an einem Objekt) und für das Kompensationssignal und eine nachgeschaltete Peripherie auf. Dieses Messprinzip ist gegenwärtig ausschließlich als Analogschaltkreis konzipiert und z.B. unter HALIOS® bekannt.

Aus verschiedenen Gründen wäre es von Vorteil, die Funktionen dieses analogen Messprinzips auf ein rein digitales System zu transformieren. Digitale Schaltungen bieten im Allgemeinen den Vorteil, dass die benötigte Chipfläche gegenüber derjenigen von Analogschaltungen kleiner ist und die Tests der Schaltkreise wesentlich vereinfacht werden. Dies und eine Reduktion der benötigten Chipfläche hat eine Senkung der Kosten pro IC (Integrated Circuit) zur Folge, da sich der Preis von integrierten Schaltkreisen nahezu ausschließlich an der benötigten Fläche orientiert.

Bei optischen Messsystemen der zuvor genannten Art handelt es sich im Kern um einen einfachen Regelkreis. Durch die Struktur und die Funktion können mit diesem Regelkreis sehr effektive Sensorschaltungen aufgebaut werden.

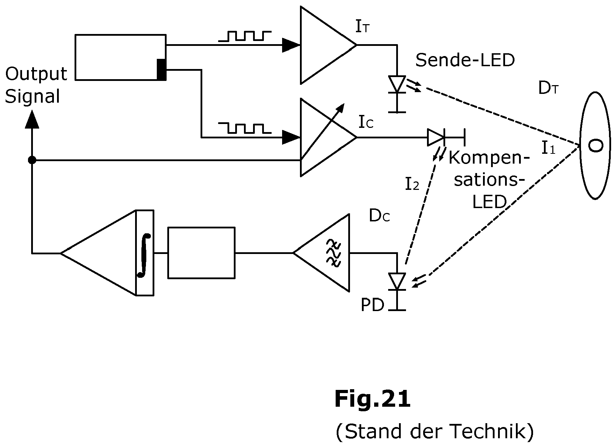

In Fig. 21 ist das Prinzip des optisch analogen HALIOS®-Messsystem-Regelkreises dargestellt. Dieser besteht im Kern aus einer Sendediode und einer Kompensationsdiode, sowie einem einer Empfangsdiode nachgeschalteten Verstärker, Synchrondemodulator und PI-Regler.

Der Nutzsignalsender (Sende-LED) sendet einen rechteckförmig amplitudenmodulierten Lichtstrom mit einem Tastverhältnis von eins aus. Wenn sich nun ein Objekt in der Richtkeule des Nutzsignalsenders befindet, wird an dem Objekt ein Teil der Strahlung reflektiert und von dem Empfänger (PD) detektiert. Der Anteil des reflektierten Lichtstroms ist dabei weniger abhängig von der Art der Oberfläche als vielmehr von dem Abstand des Objektes.

Der (zweite bzw. Kompensations-)Sender (Kompensations-LED) sendet ebenfalls einen rechteckförmig amplitudenmodulierten Lichtstrom aus, welcher von dem Empfänger (PD) detektiert wird. Allerdings ist das ausgesendete Signal nun um 180° phasenverschoben und der Lichtstrom wird direkt in den Empfänger (PD) eingekoppelt. Der Kompensationssignalsender kompensiert also den Lichtstrom des Nutzsignalsenders. An dem Empfänger (PD) überlagern sich dementsprechend die Lichtströme der beiden Sender.

Hier ist bereits zu erkennen, dass dann, wenn die Amplitude der beiden Sender gleich groß ist und die Reflektion des Signals des Nutzsignalsenders 100 % beträgt, der Empfänger einen konstanten Lichtstrom detektiert.

Die aufsummierten und detektierten Lichtströme (ausschließlich die Wechselanteile der detektierten Signale) werden anschließend verstärkt und gefiltert. Mit einem Synchrondemodulator kann nun festgestellt werden, welcher Sender zu stark sendet. Dieser Parameter wird dann im nachgeschalteten PI-Regler als Rückführung verwendet, und zusammen mit der Sollwertvorgabe, welche Null beträgt, kann dann die Regelabweichung und daraus resultierend die Stellgröße berechnet werden. Mit der Stellgröße wird anschließend die Amplitude des Kompensationssignalsenders so angepasst, dass die Differenz der beiden Lichtströme zu Null wird. Die Stellgröße ist direkt proportional zur optischen Kopplung (DT) des Nutzsignalsenders zum Empfänger. Die optische Kopplung ist wiederum direkt von der Reflektion, also dem Abstand des Objektes, abhängig.

Wie zu erkennen ist, handelt es sich bei der Schaltung nach Fig. 21 (und damit auch bei der Erfindung) um eine Vorrichtung zur Bestimmung mindestens einer Eigenschaft in der Übertragungsstrecke $I_1$ zwischen dem Nutzsender und dem Empfänger (nämlich z.B. zur Untersuchung, ob sich dort ein Objekt befindet) eines Übertragungskanals, der eine zweite (bekannte) Übertragungsstrecke $I_2$ zwischen dem Kompensationssignalsender und dem Empfänger aufweist. Die Verhältnisse können aber auch umgekehrt gegeben sein.

Das Besondere dieser Anordnung ist, dass die Differenzenbildung der beiden Lichtströme direkt im physikalischen Medium, nämlich dem Empfänger, und nicht erst im Regler stattfindet. Hierdurch erfährt der Lichtstrom des Kompensationssignalsenders die gleichen Verzerrungen wie das Messsignal, wodurch das System beispielsweise gegen Verschmutzungen unempfindlich wird. Somit ist das optische Messsystem nahezu unempfindlich gegenüber Verschmutzungen, Umgebungslicht oder ähnlichen Störgrößen. Die Grenze der Immunität gegenüber Störgrößen ist etwa dann erreicht, wenn der Empfänger aufgrund eines zu intensiven Umgebungslichtes den Fotostrom nicht mehr steigern kann. Insbesondere führt die Summierung im Medium zu einer Unempfindlichkeit gegenüber Verschmutzungen und Sensordrift.

Ein weiterer Vorteil ist, dass im ausgeregelten Fall der Wechselanteil des Empfangssignals Null ist und somit ein nachgeschalteter Verstärker das Differenzsignal fast beliebig hoch verstärken kann, um die Empfindlichkeit zu maximieren.

Die Vorteile des bekannten Messsystems nach Fig. 21 sind somit die hohe Störsicherheit, die hohe Empfindlichkeit und die Verschleißfreiheit, da es sich um einen optischen Sensor handelt.

Als weiterer Vorteil sei die Eigenschaft angemerkt, dass einzelne Messsysteme auch als Gruppe nutzbar sind. Das bedeutet, dass es möglich ist, mehrere Grundelemente (bestehend aus drei Dioden) als Gruppe zu verschalten. Mit einer solchen Verschaltung lassen sich dann einzelne Raumelemente mit ihren Objekten vollständig detektieren (Detektion von Bewegungsrichtungen im Raum). Anwendung findet diese Eigenschaft beispielsweise bei der sogenannten Gestenerkennung.

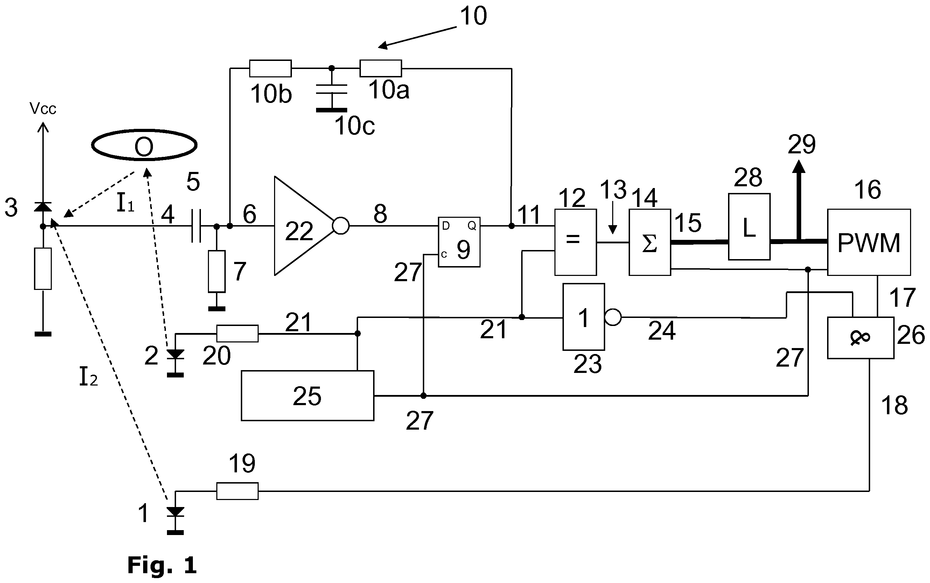

Fig. 1 zeigt das Blockschaltbild der erfindungsgemäß digital ausgeführten Gesamtschaltung entsprechend dem bekannten Messprinzip, wobei hier anhand der Detektion eines sich in die Übertragungsstrecke $I_1$ hinein bewegenden Objekts eine Annäherung desselben erkannt und damit die (Übertragungs-) Eigenschaft der Übertragungsstrecke $I_1$, hier die Größe des Signals eines Nutzsignalsenders 2, anhand des Messsignals eines Empfängers 3 untersucht wird. Nach dem Empfang des Signals des Nutzsignalsenders 2 durch einen Empfänger 3, beispielsweise durch eine Fotodiode, wird dessen analoges Ausgangssignal 4 zunächst digitalisiert. Um dem Anspruch eines volldigitalen Entwurfs gerecht zu werden, soll dabei die Verwendung eines konventionellen ADCs vermieden werden. Der ADC soll daher so weit wie möglich unabhängig von Parameterschwankungen eines Halbleiterprozesses sein. Darum wird ein Hochpassfilter (hier z.B. konkret in Form eines diskreten Kondensators 5) in Serie zum Ausgangssignal 4 des Empfängers 3 geschaltet. Dieser ist so auf eine Spannung aufgeladen, dass er in etwa die Spannungsdifferenz zwischen dem Spannungsarbeitspunkt des Empfängers 3, beispielsweise einer Fotodiode, und der Schaltschwelle eines nachfolgenden Inverters 22 ausgleicht. Im Ruhezustand befindet sich also der Eingang des Inverters 22 genau im Umschaltpunkt desselben.

Der Ausgang 8 des Inverters 22 wird über einen diskreten, typischerweise chip-externen Tiefpassfilter 10 aus z.B. zwei Widerständen 10a,10b und einem Kondensator 10c auf den Eingang rückgekoppelt. Dessen Widerstände 10a, 10b bilden mit einem weiteren am Rückkoppelknotenpunkt bzw. Eingang des Inverters 22 gegen Masse geschalteten Widerstand 7 einen Spannungsteiler, über den der Arbeitspunkt eingestellt wird. Das in Fig. 1 gezeigte D-Flip-Flop 9 (Synchronisations-Flip-Flop) wird in seiner Funktion später erläutert und dient der Performance-Verbesserung. Es hat sich gezeigt, dass dieses Flip-Flop 9 vorteilhaft ist. Für das unmittelbare Verständnis der Erfindung und deren Grundfunktion ist es jedoch zunächst nicht erforderlich.

Ist der Kondensator 5 nicht ausreichend geladen, so erreicht der Eingang 6 des Inverters 22 nicht die Schaltschwelle desselben und der Ausgang 8 ist im Zustand high. Dies führt zu einem Strom durch die Widerstände 10a und 10b und damit zur Aufladung des Kondensators 5. Wird am Inverter-Eingang 6 die Schaltschwelle des Inverters 22 erreicht, so endet der Ladevorgang und ein Entladevorgang beginnt. Ist die Spannung am Inverter-Eingang 6 zu hoch, so ist der Inverter-Ausgang 8 auf low und es kommt zu einem Entladestrom durch den Widerstand 7 und die Widerstände 10b und 10a.

Es ist zweckmäßig, nicht nur einen Inverter 22 sondern eine Inverter-Kette aus einer ungeraden Anzahl von Invertern zu verwenden, um die Verstärkung zu erhöhen. Eine zu hoch gewählte Verstärkung führt allerdings zu einem Schwingverhalten. Die Grenze wird hierbei durch die parasitären Elemente bestimmt, die zu einem Anschwingen dieser Kette bei zu hohen Verstärkungen führt.

Der Kondensator 10c des Filters 10 dient zur Tiefpassfilterung des Rückkopplungssignals. Den gleichen Zweck erfüllt das eingeschobene, mit dem Systemtakt 27 getaktete D-Flip-Flop 9, das das Signal am Inverter-Ausgang 8 abtastet und die gleiche Funktion erfüllt, wie sie eine Sample-and-Hold-Schaltung hätte, die sich am Eingang 6 des Inverters befinden würde und das analoge Ausgangssignal des Empfängers mit einem analogen Pegel in den Systemtakt einsynchronisieren würde. Insofern wird durch diese Stufe also eine zweifache Diskretisierung durchgeführt, zum einen wird das Empfängerausgangssignal 4 abgetastet. Zum anderen wird es auf einen diskreten digitalen Spannungspegel abgebildet.

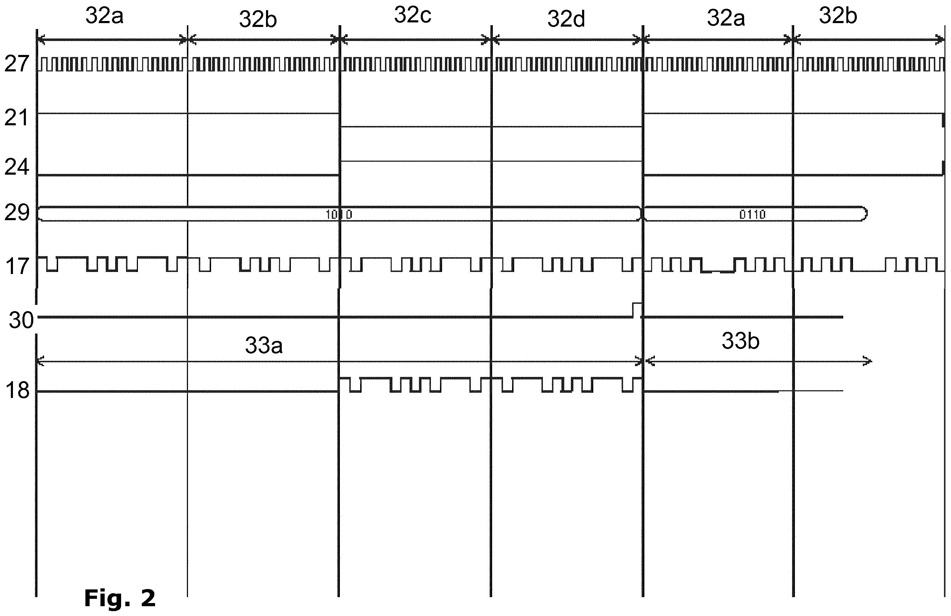

Das so erzeugte synchrone Ein-Bit-Ausgangssignal 11 des Ein-Bit-Analog-Digital-Wandlers wird mit dem Sendesignal 21 digital zum Signal 13 multipliziert. Dies geschieht durch ein EXOR-Gatter 12. Hierbei entsprechen ein Low-Pegel des Ein-Bit-Ausgangssignals 11 einer -1 und ein High-Pegel einer 1. Ebenso entsprechen hierbei ein High-Pegel des Sendesignals 21 einer 1 und ein Low-Pegel einer -1. Dieses Sendesignal 21 wird neben anderen Steuersignalen durch einen zentralen Automaten (Generator 25) aus dem Systemtakt (Clock 27) erzeugt. Das Sendesignal wird durch den Nutzsignalsender 2 über einen ersten, unbekannten Übertragungskanal an den besagten Empfänger 3 gesendet. Der Nutzsignalsender 2 kann beispielsweise eine LED (Leuchtdiode) oder ein anderer elektromagnetischer Sender sein. Entsprechend kann es sich bei dem Empfänger 3 um einen korrespondieren Empfänger handeln. Im Falle einer LED als Nutzsignalsender 2 wäre das beispielsweise eine Fotodiode. Das durch die zuvor beschriebene Multiplikation gebildete multiplizierte Empfängerausgangssignal 13 wird durch einen Up-Down-Counter 14 aufsummiert. Typischerweise werden nicht alle Bits des Ausgangssignals 15 des Up-Down-Counters 14 auf die nachfolgende PWM-Einheit 16 gegeben, sondern nur die höherwertigen Bits. Hierdurch entsteht ein integrierender Filtereffekt. Die PWM-Einheit 16 sendet dabei in PWM-Perioden 32 (in Fig. 2 die Perioden 32a,32b,32c und 32d). Typischerweise ergeben mehrere PWM-Perioden 32 (in Fig. 2 die Perioden 32a,32b,32c und 32d) die Grundperiode des Sendesignals 21. In einer beispielhaften Implementierung hat es sich als günstig erwiesen, dass vier PWM-Perioden 32 der Transmissionsperiode 33 eines Sendesignalbits dem Sendesignal 21 entsprechen (siehe auch Fig. 2). Zu Beginn einer jeden PWM-Periode 32 wird in einem Register 28 der aktuelle Wert des Ausgangssignals 15 des Up-Down-Counters 14 festgehalten, damit die PWM-Einheit 16 einwandfrei arbeiten kann. In einem experimentellen Aufbau hatte es sich erwiesen, dass es ansonsten zu periodischen Störungen kommen kann. Ursache ist, dass die PWM-Einheit 16 innerhalb einer PWM-Periode 32 anderenfalls inkonsistente Werte sendet. Als besonders günstig hat es sich erwiesen, wenn der Wert des Up-Down-Counters 14 in dem letzten Takt des Systemtaktes 27 in einer PWM-Periode 32 im besagten Register 28 gespeichert wird. Das entsprechende Steuersignal kommt dabei beispielsweise aus dem Generator bzw. einer zentralen Steuereinheit 25 und ist in Fig. 1 zur besseren Übersichtlichkeit nicht eingezeichnet.

Das so gewonnene PWM-Signal 17 wird in einem UND-Gatter 26 mit dem im Inverter 23 invertierten Sendesignal 21 (dem invertierten Sendesignal 24) multipliziert. Hierbei entspricht der Low-Pegel des invertierten Sendesignals 24 einer 0 und der High-Pegel einer 1. Aufgrund dieser geänderten Wertigkeit kann bei dieser Multiplikation ein UND-Gatter an Stelle des bei der ersten Multiplikation verwendeten EXOR-Gatters verwendet werden. Der Ausgang 18 des UND-Gatters 26 speist typischerweise über einen Treiber oder Vorwiderstand 19 den Kompensationssignalsender 1.

Alternativ können am Eingang des UND-Gatters 26 das Signal 29 und das invertierte Sendesignal 24 anstehen, wobei das Ausgangssignal des UND-Gatters 26 einer PWM-Einheit 16 zugeführt wird, deren Ausgang 18 den Kompensationssignalsender 1 speist (gegebenenfalls über einen Treiber oder Vorwiderstand).

Beide Sender, der (erste) Nutzsignalsender 2 und der Kompensationssignalsender 1, strahlen in den Empfänger 3 ein. Der Nutzsignalsender 2 übermittelt sein Signal dabei typischerweise über eine Übertragungsstrecke $I_1$ mit unbekannten Eigenschaften, die es zu bestimmen gilt, während die Transmission des Kompensationssignalsenders 1 den Empfänger über eine im Wesentlichen bekannte Übertragungsstrecke $I_2$ erreicht.

Wesentlich ist nun, dass die Überlagerung der Signale nahezu linear erfolgt, wodurch infolge der hohen Verstärkung bei geeigneter Wahl der Vorzeichen eine Kompensation der Sendepausen des Nutzsignalsenders 2 durch den Kompensationssignalsender 1 erfolgt, so dass das Signal am Eingang 6 mehr oder weniger ein Gleichsignal ist. Der Inverter 22 schwankt daher immer ein wenig um seine Schaltschwelle herum, was zu Oszillationen führt, die durch das Systemrauschen weiter angeregt werden. Hier hat sich das Flip-Flop 9 als sehr hilfreich erwiesen, da es die Oszillationen mit dem Systemtakt synchronisiert und alle nicht synchronen Schwingungen unterdrückt. Die trotzdem noch auftretenden Schwankungen werden durch Reduktion der Busbreite des Signals 29 gegenüber dem Ausgangssignal 15 weiter reduziert. Der Up-Down-Counter 14 erhält damit die Funktion eines Tiefpassfilters.

Mathematisch gesehen führt die Stufe bestehend aus EXOR-Gatter 12, Up-Down-Counter 14 und Register 28 eine Skalarmultiplikation des digitalen Signals 21 mit dem Ausgangssignal 11 des Analog-Digital-Wandlers durch. Der Wert des Signals 29 gibt daher an, wie viel des Sendesignals 21 im synchronisierten Ausgangssignal 11 enthalten ist.

Die zentrale Steuereinheit 25 ist typischerweise mit dem Up-Down-Counter 14 und der PWM-Einheit 16 so verbunden, dass diese synchron zueinander laufen. Diese Synchronisation wird durch ein Synchronisationssignal sichergestellt, die in Fig. 1 nicht eingezeichnet sind.

Es hat sich, wie bereits erwähnt, als hilfreich erwiesen, wenn ein Bit-Wechsel des Sendesignals 21, das durch die zentrale Steuereinheit 25 erzeugt wird, synchron zum PWM-Wortwechsel erfolgt. In einer Realisierung der Erfindung hat es sich als hilfreich erwiesen, dass diese Wechselfrequenz des Sendesignals 21 viermal so niedrig wie die PWM-Wort-Frequenz gewählt wurde. Die PWM-Wort-Frequenz ist die Inverse der PWM-Periode 32. Die Wechselfrequenz ist die Inverse der Sendesignalperiode 33.

Um die Filterwirkung des Dezimationsfilters zu maximieren, wird die PWM-Einheit 16 so moduliert, dass sie mit möglichst hoher Frequenz sendet.

Ein geeigneter Algorithmus für ein 8 Bit PWM-Schema hierfür lautet in VHDL (High Speed Integrated Circuit Hardware Description Language):

```
        ------------------------------------------------------------
        -- G E N E R I E R U N G   D E S   P W M   S I G N A L E S
        ------------------------------------------------------------
        --------------------------------------------------------------
        -- Stufe zur Erzeugung des Ausgangssignals in Abhängigkeit vom
        -- Stand des PWM Counters und der in PWM Data gespeicherten
        -- PWM Weite
        --------------------------------------------------------------
        -- LOGIK
        process (pwm_counter_out)
        begin
            not_pwm_counter_out(0)<=(not pwm_counter_out(0));
            not_pwm_counter_out(1)<=(not pwm_counter_out(1)) and
                                    not_pwm_counter_out(0);
            not_pwm_counter_out(2)<=(not pwm_counter_out(2)) and
                                    not_pwm_counter_out(1);
            not_pwm_counter_out(3)<=(not pwm_counter_out(3)) and
                                    not_pwm_counter_out(2);
            not_pwm_counter_out(4)<=(not pwm_counter_out(4)) and
                                    not_pwm_counter_out(3);
            not_pwm_counter_out(5)<=(not pwm_counter_out(5)) and
                                    not_pwm_counter_out(4);
            not_pwm_counter_out(6)<=(not pwm_counter_out(6)) and
                                    not_pwm_counter_out(5);

        end process;

        process (pwm_counter_out, not_pwm_counter_out, pwm_data)
        begin
                -- Diese Routine beschreibt die Generierung
                -- des PWM Signals als
                -- Zusammensetzung aus Fourier-Frequenzen
                -- Dies hat den Vorteil, dass jedes PWM Signal
                -- eine maximale Frequenz aufweist.
                -- Niedrige Frequenzen sind limitiert
```

```vhdl
        -- hierdurch wird die Filterung
        -- dieser parasitären Frequenzen
        -- durch die langsamen LEDs und Fotodioden
        -- maximiert.

        pwm_internal<=
        ( pwm_counter_out(0) and pwm_data(7)) or
        (not_pwm_counter_out(0) and pwm_counter_out(1) and
            pwm_data(6)) or
        (not_pwm_counter_out(1) and pwm_counter_out(2) and
            pwm_data(5)) or
        (not_pwm_counter_out(2) and pwm_counter_out(3) and
            pwm_data(4)) or
        (not_pwm_counter_out(3) and pwm_counter_out(4) and
            pwm_data(3)) or
        (not_pwm_counter_out(4) and pwm_counter_out(5) and
            pwm_data(2)) or
        (not_pwm_counter_out(5) and pwm_counter_out(6) and
            pwm_data(1)) or
        (not_pwm_counter_out(6) and pwm_counter_out(7) and
            pwm_data(0))   ;
    end process;
    -- STATEVECTOR
    process (clk, pwm_internal, reset_counter,
            reset_counter_extern)
    begin
        if rising_edge(CLK) then
        if reset_counter = '1' or reset_counter_extern = '0'
            then
                pwm_out <= '0';
            else
                pwm_out <= pwm_internal;
            end if;
        end if;
    end process;
    ----------------------------------------------------------------

    -- in dieser Zeile wird das PWM Signal
    -- ausgegeben.
    PWM_SIGNAL                  <= pwm_out;
    ----------------------------------------------------------------
```

Dies stellt selbstverständlich nur den relevanten Ausschnitt aus dem Gesamt VHDL Code dar.

Bei einer Realisierung des PWM-Schemas hat es sich als günstig erwiesen, eine 8-Bit-PWM-Einheit zu verwenden. Aus Gründen der Übersichtlichkeit wird das Ergebnis für ein 4-Bit-PWM-Schema erläutert, was sich auf beliebig breite PWM-Vorrichtungen übertragen lässt:

| PWM Sendewort | | | | PWM-Sende-Bit | | | | | | | | | | | | | | | Wert |
|---|---|---|---|---|---|---|---|---|---|---|---|---|---|---|---|---|---|---|---|
| 0 | 1 | 2 | 3 | 1 | 2 | 3 | 4 | 5 | 6 | 7 | 8 | 9 | 10 | 11 | 12 | 13 | 14 | 15 | |
| 0 | 0 | 0 | 0 | 0 | 0 | 0 | 0 | 0 | 0 | 0 | 0 | 0 | 0 | 0 | 0 | 0 | 0 | 0 | 0 |
| 1 | 0 | 0 | 0 | 0 | 0 | 0 | 0 | 0 | 0 | 0 | 1 | 0 | 0 | 0 | 0 | 0 | 0 | 0 | 1 |
| 0 | 1 | 0 | 0 | 0 | 0 | 0 | 1 | 0 | 0 | 0 | 0 | 0 | 0 | 0 | 1 | 0 | 0 | 0 | 2 |
| 1 | 1 | 0 | 0 | 0 | 0 | 0 | 1 | 0 | 0 | 0 | 1 | 0 | 0 | 0 | 1 | 0 | 0 | 0 | 3 |
| 0 | 0 | 1 | 0 | 0 | 1 | 0 | 0 | 0 | 1 | 0 | 0 | 0 | 1 | 0 | 0 | 0 | 1 | 0 | 4 |
| 1 | 0 | 1 | 0 | 0 | 1 | 0 | 0 | 0 | 1 | 0 | 1 | 0 | 1 | 0 | 0 | 0 | 1 | 0 | 5 |
| 0 | 1 | 1 | 0 | 0 | 1 | 0 | 1 | 0 | 1 | 0 | 0 | 0 | 1 | 0 | 1 | 0 | 1 | 0 | 6 |
| 1 | 1 | 1 | 0 | 0 | 1 | 0 | 1 | 0 | 1 | 0 | 1 | 0 | 1 | 0 | 1 | 0 | 1 | 0 | 7 |
| 0 | 0 | 0 | 1 | 1 | 0 | 1 | 0 | 1 | 0 | 1 | 0 | 1 | 0 | 1 | 0 | 1 | 0 | 1 | 8 |
| 1 | 0 | 0 | 1 | 1 | 0 | 1 | 0 | 1 | 0 | 1 | 1 | 1 | 0 | 1 | 0 | 1 | 0 | 1 | 9 |
| 0 | 1 | 0 | 1 | 1 | 0 | 1 | 1 | 1 | 0 | 1 | 0 | 1 | 0 | 1 | 1 | 1 | 0 | 1 | 10 |
| 1 | 1 | 0 | 1 | 1 | 0 | 1 | 1 | 1 | 0 | 1 | 1 | 1 | 0 | 1 | 1 | 1 | 0 | 1 | 11 |
| 0 | 0 | 1 | 1 | 1 | 1 | 1 | 0 | 1 | 1 | 1 | 0 | 1 | 1 | 1 | 0 | 1 | 1 | 1 | 12 |
| 1 | 0 | 1 | 1 | 1 | 1 | 1 | 0 | 1 | 1 | 1 | 1 | 1 | 1 | 0 | 1 | 1 | 1 | 1 | 13 |
| 0 | 1 | 1 | 1 | 1 | 1 | 1 | 1 | 1 | 1 | 1 | 0 | 1 | 1 | 1 | 1 | 1 | 1 | 1 | 14 |
| 1 | 1 | 1 | 1 | 1 | 1 | 1 | 1 | 1 | 1 | 1 | 1 | 1 | 1 | 1 | 1 | 1 | 1 | 1 | 15 |

Wichtig ist, dass die PWM-Perioden 32 nicht $2^n$ sondern nur $2^n-1$ Bits, also $2^n-1$ Takte des Systemtakts 27 umfasst. Außerdem ist das Signal um den zeitlichen Schwerpunkt, d.h. der halben PWM-Periode 32, herum symmetrisch, was ein wesentlicher Vorteil ist, da hierdurch der PWM-Jitter auf eine halbe Taktbreite begrenzt wird.

Fig. 2 zeigt ein entsprechendes Taktschema für eine 3 Bit-PWM-Einheit. Auch hier wurde ausschließlich aufgrund der klareren Darstellung eine 3-Bit-PWM-Einheit gewählt, obwohl aufgrund der Erfahrungen eine 8-Bit-PWM-Einheit besser ist.

Der Systemtakt 27 synchronisiert die gesamte Logik. Für das Beispiel einer 3 Bit PWM-Einheit dauert eine PWM-Periode sieben Systemtakte 27.

Das Beispiel aus Fig. 2 ist so gewählt, dass jede Transmissionsperiode 33 aus vier PWM-Perioden 32a,32b,32c,32d besteht. Dieses Verhältnis hat sich in einem Anwendungsfall der Erfindung als sinnvoll erwiesen. Andere Verhältnisse sind möglich.

Das Sendesignal 21 ändert den logischen Wert synchron zum Beginn einer neuen PWM-Periode 33b. Gleiches gilt dann auch für das invertierte Sendesignal 24. Ebenso wird der Wert des Up-Down-Counters mit einem Steuersignal 30 im letzten Takt des vorhergehenden Sendesignal-Periode 33a gespeichert und ist für den logischen Inhalt des PWM-Ausgangssignals 17 in der nachfolgenden Sendesignal-Periode 33b maßgeblich.

Das Kompensationssendesignal wird am Ausgang 18 des UND-Gatters 26 durch Multiplikation des PWM-Ausgangssignals 17 mit dem invertierten Sendesignal 24 erhalten.

Mathematisch gesehen kann die erste Multiplikation des einsynchronisierten Inverter-Ausgangssignals 11 mit dem Sendesignal 21 im EXOR-Gatter 12 und die anschließende Integration durch den Up-Down-Counter 14 als Bildung eines Skalarproduktes zweier Funktionen verstanden werden.

Diese ist typischerweise für zwei Signale a(t) und b(t) bezogen auf die Signalperiode T definiert als

$$\int_0^T a(t) * b(t)dt = \langle a(t), b(t) \rangle$$

Im erfindungsgemäßen Fall entspricht die Periode T beispielsweise der Periode des Sendesignals 21.

Diese Vorgehensweise ist bereits in der EP-A-2 631 674 beschrieben, auf deren Inhalt hiermit Bezug genommen wird, so dass deren Inhalt Bestandteil dieser Anmeldung ist.

Da die Summation in dem Integral erst beim Erreichen der Integrationsgrenze bei T abgeschlossen ist, wird die Skalarprodukt-Bildung erst mit dem letzten Takt abgeschlossen. Dies geschieht in dem Beispiel durch die Speicherung des Zählerstandes des Up-Down-Counters 14 in dem Register 28 am Ende einer Sendeperiode 33. Dies wird durch das Steuersignal 30 veranlasst. Der Wert entspricht einen Fourier-Koeffizienten für das Sendesignal 21.

Die anschließende Multiplikation des PWM-Ausgangssignals 18 mit dem invertierten Sendesignal 24 führt zu einer Rücktransformation vom Frequenz- in den Zeit-Raum.

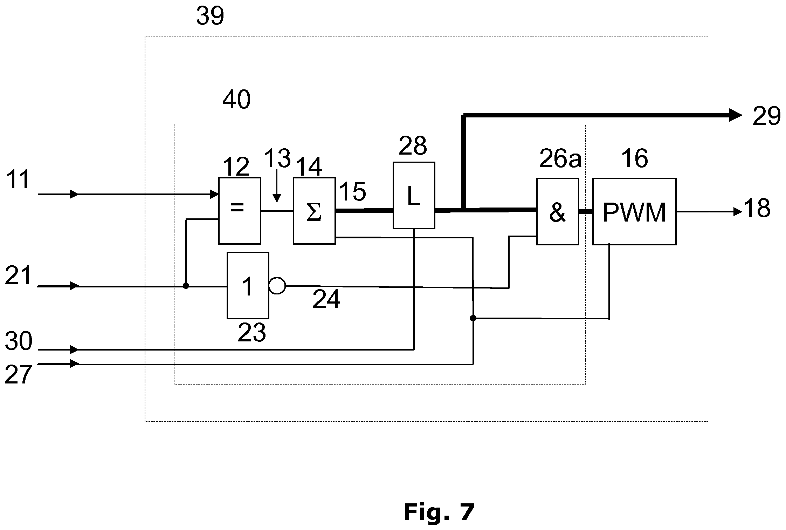

Diese beiden Operationen, Bestimmung des Fourier-Koeffizienten bezogen auf das Signal 29 und Rücktransformation, werden zweckmäßigerweise in einer Einheit (Block 39) zusammengefasst. Fig. 7 zeigt eine solche Einheit.

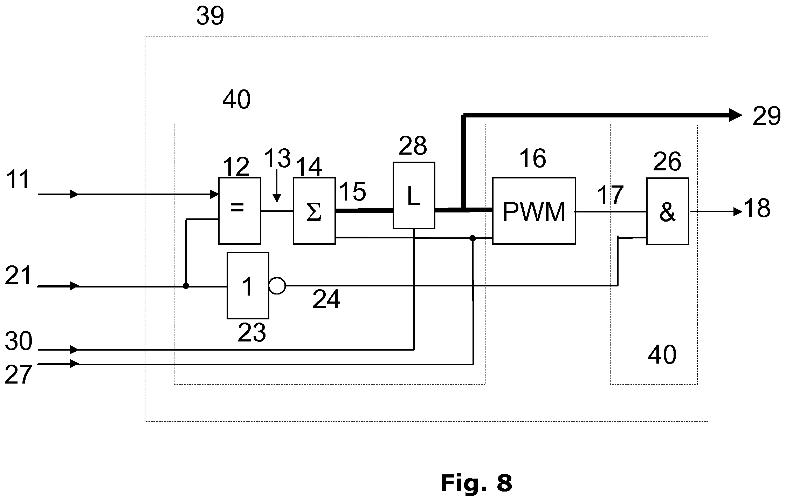

In manchen Fällen kann es sinnvoll sein, die Reihenfolge von PWM-Einheit 16 und zweiter Multiplikation durch das UND-Gatter 26 zu vertauschen. Die PWM-Einheit kann dann für mehrere Skalarprodukte durch Summation gleichzeitig verwendet werden. Dieser Unterschied ist in den Fign. 7 und 8 dargestellt.

In dem Fall ist es sinnvoll, die Einheit 40 ohne die PWM-Einheit 16 zu definieren.

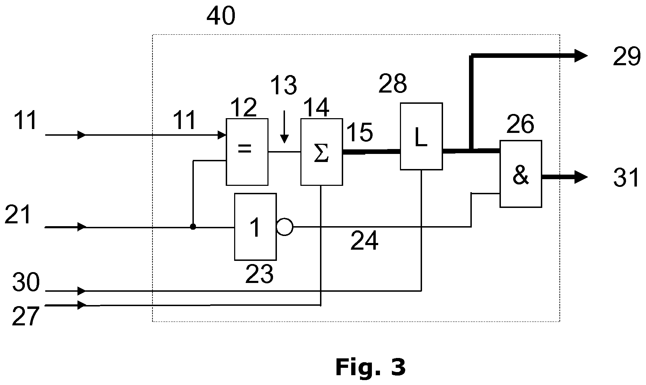

Fig. 3 zeigt eine solche Einheit 40. Hierbei wird jedes parallele Bit des Signals 29 mit dem invertierten Sendesignal 24 einzeln mit einem separaten UND-Gatter 26 multipliziert. Das Ergebnis ist der rücktransformierte Datenbus 31.

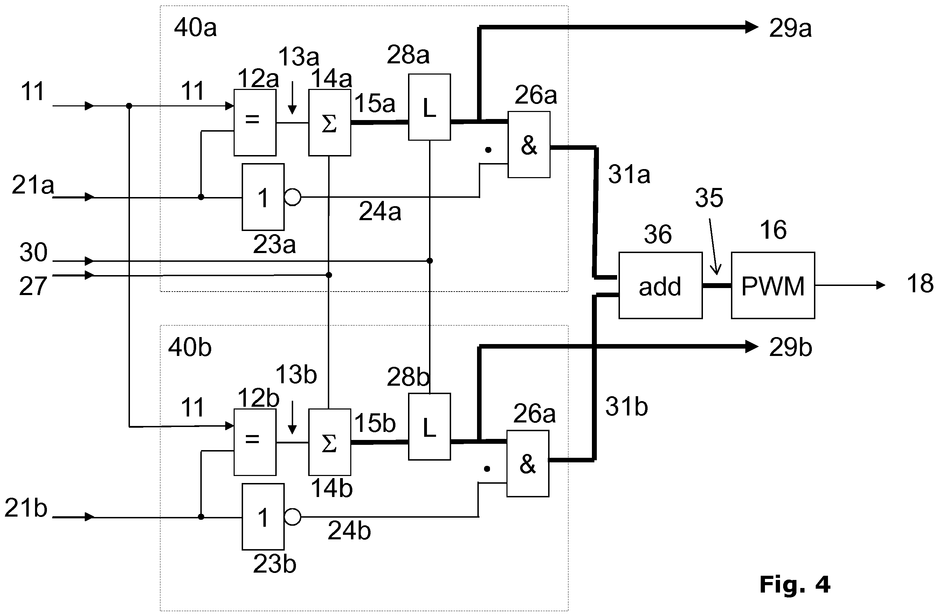

Fig. 4 zeigt, wie zwei solcher Einheiten 40, hier mit 40a und 40b bezeichnet, verwendet werden. Die erste Einheit 40a führt das Skalarprodukt zwischen dem ein-synchronisierten Inverter-Ausgangssignal 11 und einem ersten Sendesignal 21a durch. Die zweite Einheit 40b führt das Skalarprodukt zwischen dem ein-synchronisierten Inverter-Ausgangssignal 11 und einem zweiten Sendesignal 21b durch. Zu den Bedingungen für die Signale 21a und 21b sei hier wieder auf EP-A-2 631 674 verwiesen. Besonders zweckmäßig ist es, wenn die Signale 21a und 21b zueinander bezüglich der realisierten Skalar-Produkte orthogonal sind. Die Untereinheiten sind jeweils zur besseren Unterscheidung zusätzlich mit a und b beschriftet.

Die beiden Kompensationsdatenströme 31a und 31b werden in einem Addierer 36 zum rücktransformierten Datenstrom 35 zusammengefasst. Dieser speist die PWM-Einheit 16, die nun als Ausgangssignal 18 ein gemeinsames Kompensationssendesignal direkt erzeugt.

Die Fourier-Koeffizienten für die Signale 21a und 21b liegen dann in Form zweier Digitalwerte 29a und 29b vor.

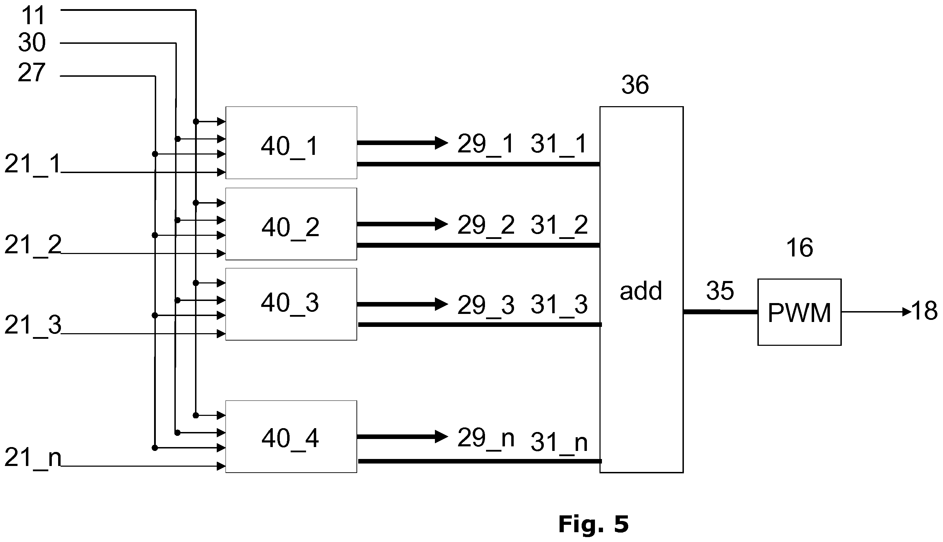

Auf diese Weise lassen sich auch Systeme mit n-Einheiten auf Basis der Einheit 40 erstellen. Die Systeme werden in Fig. 5 zur Vereinfachung nur noch als n verschiedene, nicht weiter strukturierte Blöcke 40_1 bis 40_n gezeigt. Die Signale sind zur Unterscheidung mit einem Unterstrich gefolgt von einer Zahl, die die zugehörige Block-Nummer angibt versehen. Wie beim System mit zwei Blöcken, werden alle Ergebnisdaten 31_1 bis 31_n durch eine Additionsvorrichtung 36 zu einem Ergebnisdatenstrom 35 zusammengefasst. Auch hier ist es besonders vorteilhaft, wenn die Signale 21_1 bis 21_n orthogonal zueinander gewählt werden.

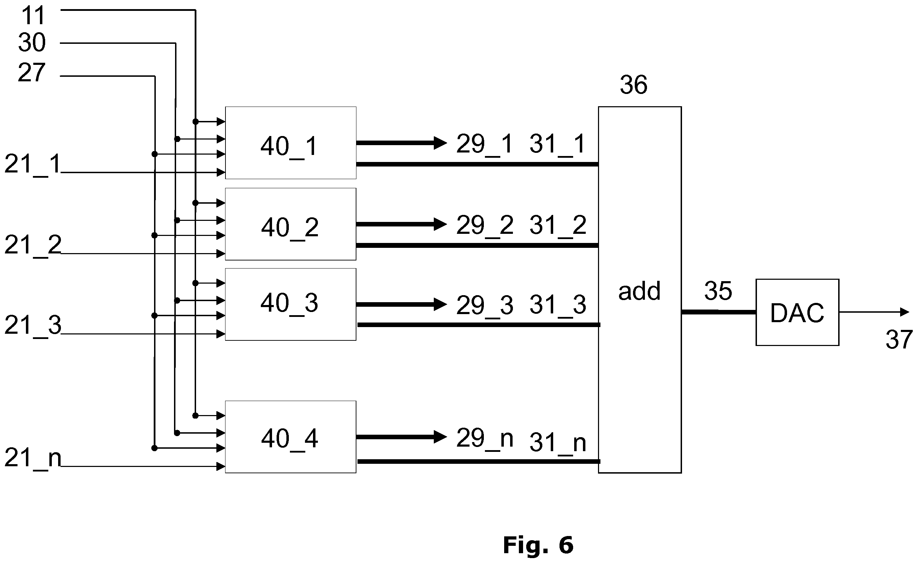

Die PWM-Einheit 16 bildet mit einer nachgeschalteten Dezimationsfilter (z.B. realisiert durch ein RC-Tiefpassfilter aus z.B. dem Widerstand 19 und der parasitären Kapazität des Kompensationssignalsenders 1) an sich einen DAC (Fign. 5 und 6). Die Verwendung einer PWM-Einheit als DAC ist nicht zwingend notwendig. Andere Wandler-Prinzipien können bei geeigneter Anpassung ebenfalls verwendet werden. Fig. 6 zeigt daher eine Konstruktion mit einem Analogausgang 37 und einem beliebigen DAC.

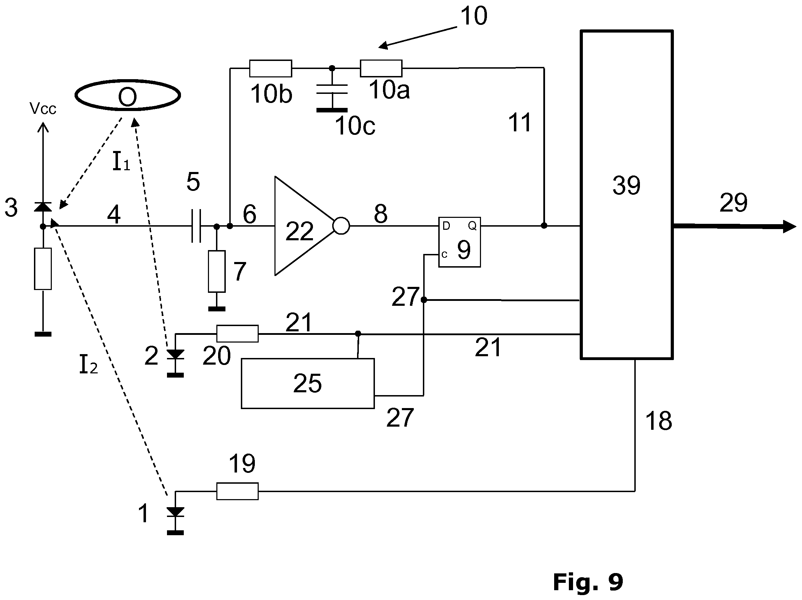

Der DAC bzw. die PWM-Einheit 16 lassen sich mit der Einheit 40 zu einem neuen Block 39 integrieren (Fig. 8). In Fig. 9 ist dargestellt, dass das die Multiplikation durchführende UND-Gatter 26 im Vergleich zu Fig. 9 hinter die PWM-Einheit 16 verschoben werden kann.

Den Einbau einer Einheit (Block 39) entsprechend Fig. 7 oder 8 in das System von Fig. 1 zeigt Fig. 9.

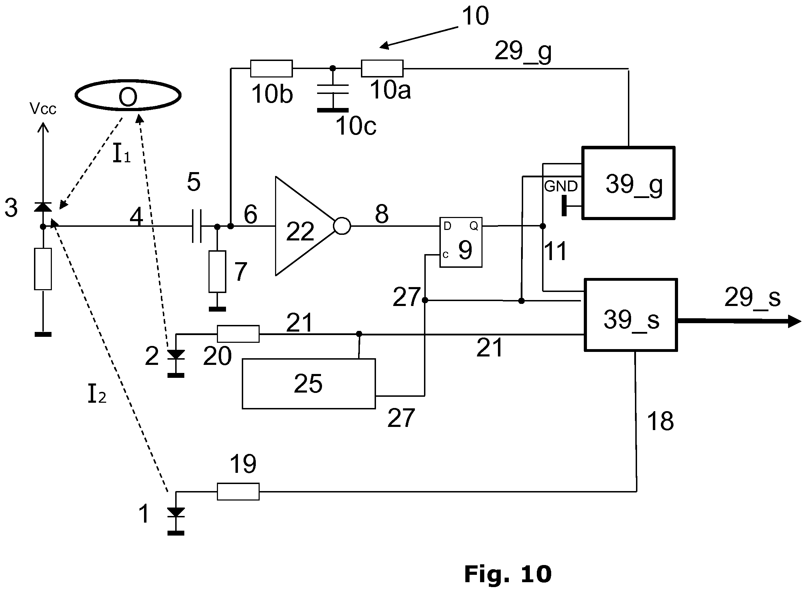

Nun ist es denkbar, ein Skalarprodukt zwischen dem einsynchronisierten Inverter-Ausgangssignal 11 und der Konstante 1 zu bilden und den erhaltenen Fourier-Koeffizienten zur Steuerung des Arbeitspunktes am Inverter-Eingang 6 über das Dezimationsfilter 10 zu verwenden. Hierfür wird der Eingang des Blockes 39_g in Fig. 10 auf Masse gelegt. Die Blöcke 39_g und 39_s entsprechen im Innern dem Block 39 von Fig. 8. Hierdurch wird der Arbeitspunkt weiter stabilisiert und der Rauschabstand weiter vergrößert. Diese Konstruktion ist in Fig. 10 gezeigt. Die Einheit zur Bestimmung des Fourier-Koeffizienten für die Konstante 1 ist mit 39_g bezeichnet. Die Einheit zur Bestimmung des Fourier-Koeffizienten für das Sendesignal 21 ist mit 39_s bezeichnet. Der entsprechende Fourier-Koeffizient ist mit 29_s bezeichnet. Der Fourier-Koeffizient für die Konstante ist mit 29_g bezeichnet.

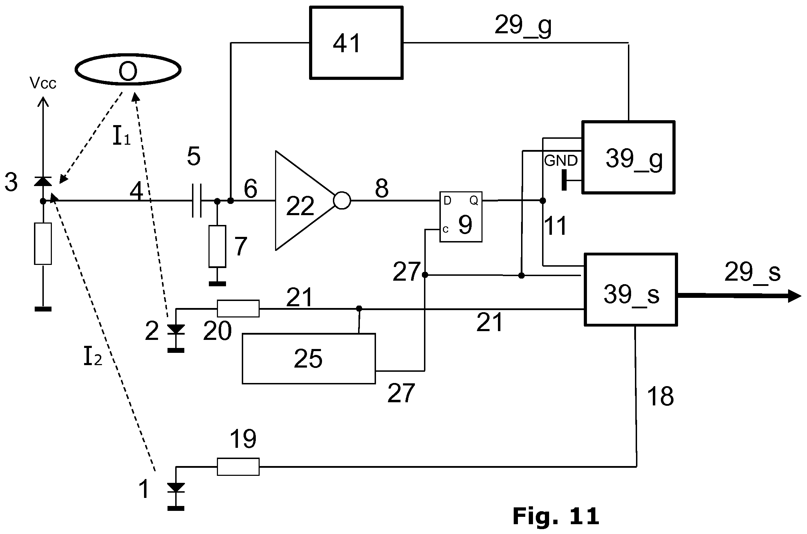

Statt des Dezimationsfilters 10 können auch andere Dezimationsfilter 41 verwendet werden. Dies ist in Fig. 11 dargestellt.

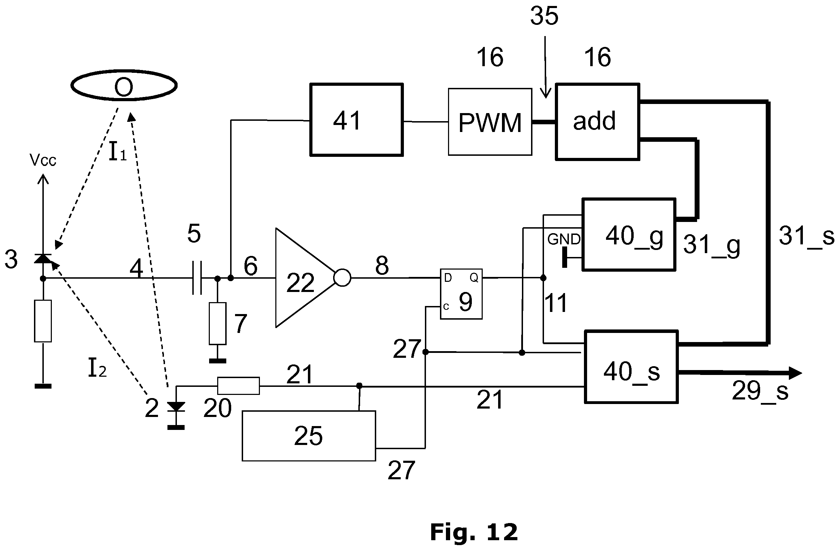

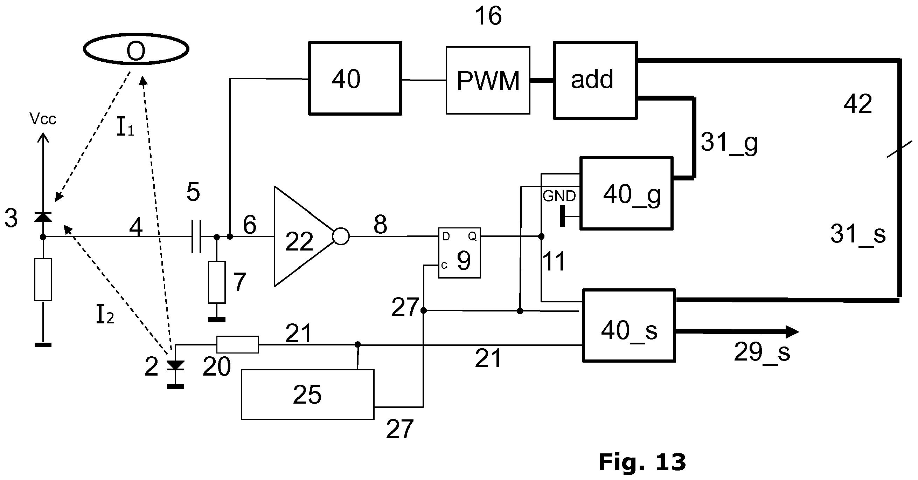

Will man das System aus Fig. 10 mit Hilfe von Einheiten 40 und ohne Kompensationssignalsender 1 aufbauen, so muss eine gemeinsame PWM-Einheit 16 zur DA-Wandlung vorgesehen werden. Dies ist in Fig. 12 dargestellt. Die Einheiten 40_g und 40_s, die im Innern einer Einheit 40 entsprechen, liefern zwei digitale Werte 31_g und 31_s, die in dem Addierer 36 zu dem bekannten rücktransformierten Gesamtdatenstrom 35 zusammengefasst werden. In diesem Fall sind das Sendesignal, dass zwischen 0 und 1 schwankt (es sei hier eine willkürliche Normierung zur Vereinfachung dieser Beschreibung vorausgesetzt) und die Konstante 1 (auch hier sei die willkürliche Normierung zur Vereinfachung dieser Beschreibung vorausgesetzt) nicht orthogonal zueinander bezüglich des für die Konstante zu bildenden Skalarproduktes. Vielmehr ergibt ein Skalarprodukt aus dem Sendesignal, das als zwischen 1 und 0 mit 50% Duty-Cycle schwankend angenommen sei, mit der Konstanten 1 einen Wert von 0,5 und nicht 1. Daher muss für eine korrekte Orthogonalisierung der halbe Wert 31_s des dem Sendesignal 21 zugehörigen Skalarproduktes aus der Einheit 40_s vom Ergebnis 31_g des der Konstanten zugeordneten Skalarproduktes 31_g abgezogen werden. Dies geschieht durch Kopieren der Bits des Datensignalbusses 31_s in einen um ein Bit schmaleren Datenbus 42 vor der Addition. Dies ist in Fig. 13 dargestellt.

Wichtig ist es nun, die Eingangsstufe der Schaltung zu analysieren.

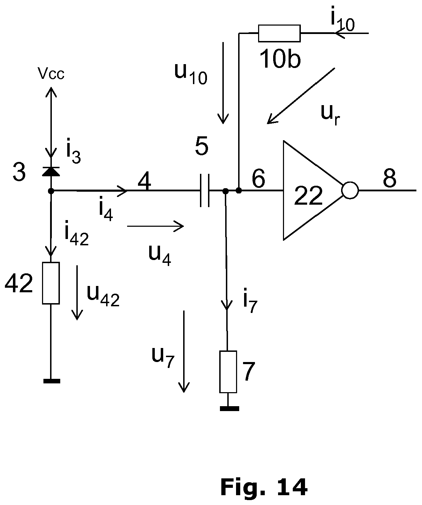

Diese ist nochmals in Fig. 14 dargestellt.

Der Arbeitswiderstand $R_{42}$ 42 der Empfangsdiode des Empfängers 3 und der (Ableit-)Widerstand 7 ($R_7$)sind in den folgenden Formeln mit $R_{42}$ bzw. mit $R_7$ bezeichnet, der Kondensator 5 mit $C_4$.

Es können dann die folgenden Gleichungen aufgestellt werden:

Maschengleichungen

$$u_{42} - u_4 - u_7 = 0 \quad \text{und} \quad u_r - u_{10} - u_7 = 0$$

Knotengleichungen

$$-i_{42} + i_3 - i_4 = 0 \quad \text{und} \quad i_{10} + i_4 - i_7 = 0$$

Spannungs-/Stromgleichungen

$$i_{42} R_{42} = u_{42} \quad \text{und} \quad i_7 R_7 = u_7 \quad \text{und} \quad i_{10} R_{10} = u_{10} \quad \text{und} \quad \frac{1}{C_4} \int i_4 dt = u_4$$

Gesucht ist $u_7(i_3)$

Als erstes werden $u_{42}$, $u_{10}$, $u_4$ und $i_7$ ersetzt durch die Maschengleichungen

$$i_{42} R_{42} - \frac{1}{C_4} \int i_4 dt - u_7 = 0 \quad \text{und} \quad u_r - i_{10} R_{10} - u_7 = 0$$

und die Knotengleichungen

$$-i_{42} + i_3 = i_4 \quad \text{und} \quad i_{10} = i_{42} - i_3 + \frac{1}{R_7} u_7$$

Weiteres Einsetzen ergibt die Maschengleichungen

$$i_{42}R_{42} - \frac{1}{C_4}\int\left(-i_{42} + i_3\right)dt - u_7 = 0 \quad \text{und} \quad u_r - \left(i_{42} - i_3 + \frac{1}{R_7}u\right)R_{10} - u_7 = 0$$

Auflösen nach $i_{42}$ ergibt

$$i_{42}R_{42} - \frac{1}{C_4}\int\left(-i_{42} + i_3\right)dt - u_7 = 0 \quad \text{und} \quad u_r - i_{42}R_{10} + i_3 R_{10} - \frac{R_{10}}{R_7}u_7 - u_7 = 0$$

bzw.

$$i_{42}R_{42} - \frac{1}{C_4}\int\left(-i_{42} + i_3\right)dt - u_7 = 0 \quad \text{und} \quad u_r\frac{1}{R_{10}} + i_3 - \left(\frac{1}{R_7} + \frac{1}{R_{10}}\right)u_7 = i_{42}$$

Einsetzen

$$\left(u_r\frac{1}{R_{10}} + i_3 - \left(\frac{1}{R_7} + \frac{1}{R_{10}}\right)u_7\right)R_{42} - \frac{1}{C_4}\int\left(-u_r\frac{1}{R_{10}} - i_3 + \left(\frac{1}{R_7} + \frac{1}{R_{10}}\right)u_7 + i_3\right)dt - u_7 = 0$$

$$u_r\frac{R_{42}}{R_{10}} + i_3 R_{42} - \frac{1}{C_4}\int\left(-u_r\frac{1}{R_{10}} + \left(\frac{1}{R_7} + \frac{1}{R_{10}}\right)u_7\right)dt = u_7\left(1 + \frac{R_{42}}{R_7} + \frac{R_{42}}{R_{10}}\right)$$

$$\left[u_r\frac{1}{R_{10}} + i_3 + \frac{1}{R_{42}R_{10}C_4}\int\left(u_r - \left(\frac{R_{10}}{R_7} + 1\right)u_7\right)dt\right]\frac{R_{42}}{1 + \frac{R_{42}}{R_7} + \frac{R_{42}}{R_{10}}} = u_7$$

Mit

$$k_1 = \frac{1}{R_{10}}, \quad k_2 = \frac{1}{R_{42}R_{10}C_4}, \quad k_3 = \frac{R_{42}}{1 + \frac{R_{42}}{R_7} + \frac{R_{42}}{R_{10}}} \quad \text{und} \quad k_4 = \frac{R_{10}}{R_7} + 1$$

ergibt sich:

$$\left[u_r k_1 + i_3 + k_2\int\left(u_r - k_4 u_7\right)dt\right]k_3 = u_7$$

Aus der Literatur, beispielsweise aus S. Norsworthy, R. Schreier, G. Temes; Delta-Sigma-Converters, IEEE Press, Circuits and Systems Society, 1996, ISBN 0-7803-1045-4, Kapitel 1.2.4 "Some Alternative Structures", dortige Fig. 1.23, Seite 23, sind Strukturen mit

$$\left[i_3 - k_2\int\left(u_r - k_4 u_7\right)dt\right]k_3 = u_7$$

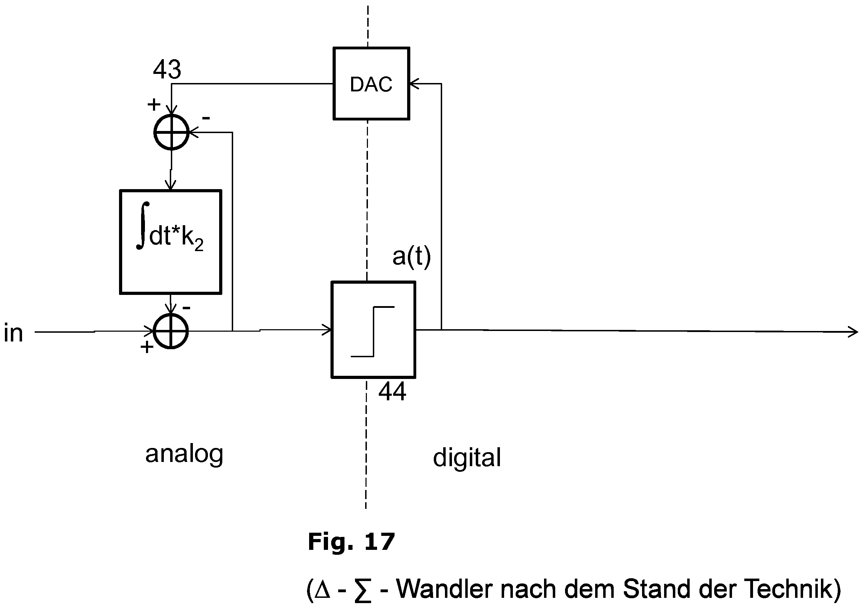

bekannt (Fig. 17).

Hierbei kann man darauf hinweisen, dass $u_7$ im Stand der Technik durch zwei Negationen positiv integriert wird und somit ein Gleichsignal durch den Integrator nicht eliminiert wird. Im erfindungsgemäßen Fall tritt jedoch nur eine Negation auf. Hierdurch wird das Eingangssignal, negativ integriert, von sich selbst abgezogen, weshalb Gleichpegel nicht in den Regelkreis gelangen. In den meisten Anwendungsfällen von Delta-Sigma-Wandlern wäre das von Nachteil. Hier jedoch weisen alle Nutzsignale eine von f=0Hz verschiedene Frequenz auf, weshalb es sich bei Gleichsignalen um Störungen handelt. Im Falle optischer Systeme kann es sich dabei beispielsweise um eine unerwünschte Sonneneinstrahlung in einen Detektor handeln.

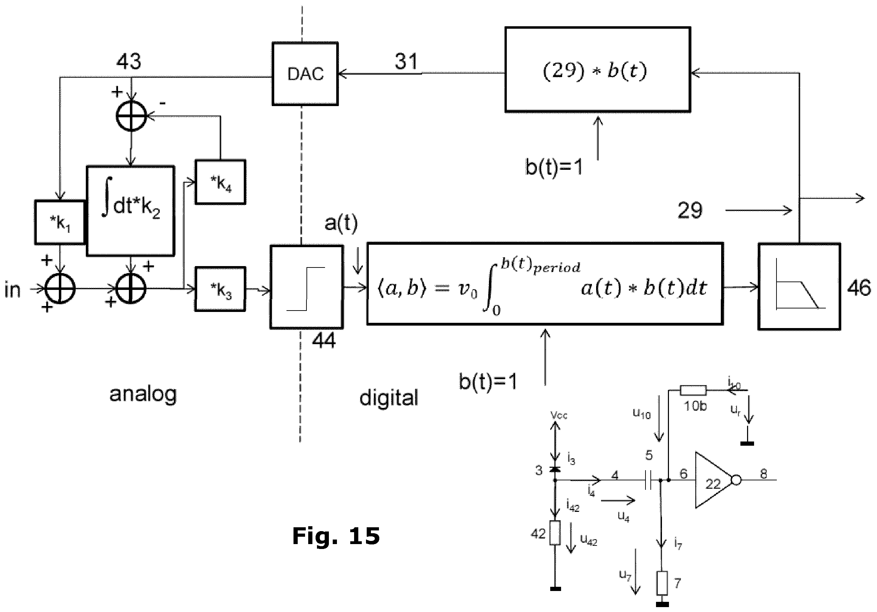

Auf Basis der oben abgeleiteten Formel lässt sich das Signallaufbild in Fig. 15 ableiten.

Zu dem Eingangssignal $i_3$ am Punkt "in" wird das mit einem Faktor $k_1$ multiplizierte analoge Rückkopplungssignal 43 hinzuaddiert. Ebenfalls hinzuaddiert wird das mit einem Faktor $k_2$ multiplizierte zeitliche Integral dieses Signals 43. Es erfolgt eine Multiplikation mit einer Konstanten $k_3$. Dieses Signal wird bei Überschreiten eines Grenzwertes durch einen idealen Ein-Bit-ADC 44 auf eine 1 und ansonsten auf eine 0 abgebildet. Es ergibt sich das Signal a(t). Es folgt vorzugsweise die Skalarproduktbildung durch Multiplikation mit dem Signal b(t) und anschließender Integration über die Periode des Signals b(t) bzw. die Periode des Systems, beispielsweise über die Periode des Signals 21 (nicht in Fig. 15 eingezeichnet), und Multiplikation mit einem Verstärkungsfaktor $v_0$. Schließlich erfolgt eine Filterung 46 des Signals 29 und eine Multiplikation zum rücktransformierten Datenbus 31. Der DAC erzeugt hieraus wieder das Rückkopplungs-signal 43.

Entscheidend gemäß der Erfindung ist, dass bis auf das Widerstands-Kondensator-Netzwerk alle Teile des DAC-Reglers digital ausgeführt werden können. Dies bringt einen erheblichen wirtschaftlichen Vorteil. So können solche Schaltungen beispielsweise vollautomatisch aus einem VHDL- der Veriolg-Code synthetisiert werden.

Ein Nachteil der Konstruktion ist, dass der Quantisierungsfehler, der durch den Ein-Bit-ADC 44 erzeugt wird, für niedrige Frequenzen besonders hoch ist. Da das System jedoch für eine Messstrecke vorgesehen ist, bei der f≠0Hz gilt, kann das Problem, wie oben beschrieben, leicht umgangen werden.

Der in Fig. 15 gezeigte Regler stellt zunächst nur den DC Arbeitspunkt korrekt ein. Das bedeutet, dass über den Kondensator $C_4$ 5 in Fig. 14 der Gleichspannungsunterschied zwischen der Umschaltspannung des Inverters 22 und dem Gleichspannungsanteil des Eingangssignals $U_{42}$ abfällt.

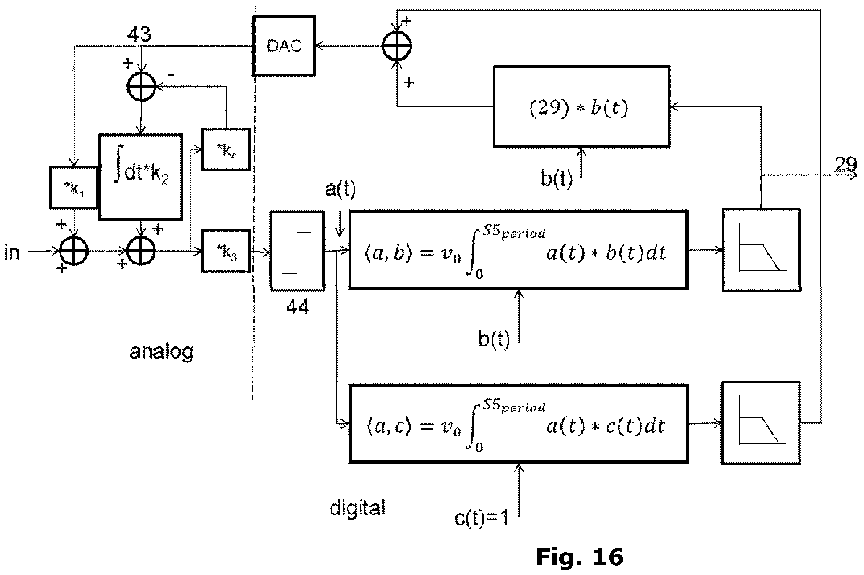

Fig. 16 zeigt das System mit zwei Signalen b(t) und c(t), das ansonsten dem System aus Fig. 13 oder dem aus Fig. 15 entspricht. Beispielsweise ist es sinnvoll, mit einem Signal c(t)=constant den Gleichanteil des Signals a(t) über das Skalarprodukt zu messen und auf Null zu regeln. Das Signal b(t) sollte dem Sendesignal des Messsenders entsprechen. Das Signal 29 gibt dann die Empfangsstärke dieses Signals an.

Fig. 17 zeigt einen Delta-Sigma-Wandler nach dem Stand der Technik. Die Zeichnung ist dem Buch *"S.R. NORWORTH et. Al, Delta-Sigma-Converters Theory Design and Simulation, Seite 1.23"* sinngemäß entnommen. Im Gegensatz zur Schaltung der Erfindung gemäß Fig. 14 wird das Eingangssignal vor dem Integrator vom Rückkoppelsignal abgezogen. Dadurch verbleibt nur noch der durch den Quantisierer erzeugte Digitalisierungsfehler in der Rückkoppelschleife. Dieser wird durch den Integrator aufsummiert und vom Eingangssignal abgezogen, wodurch das Ausgangssignal a(t) insbesondere für Gleichsignale im Mittel fehlerfrei wird.

Das System nach Fig. 15 arbeitet im beabsichtigten Betriebsmodus mit $k_4 \geq 0$ derart, dass der Integrator den Gleichanteil unterdrückt. Dies dient dazu, das Eingangssignal auf die Schaltschwelle des Inverters, der als Quantisierer arbeitet, anzuheben. Der erfindungsgemäße Delta-Sigma-Wandler ist aus diesem Grund für Gleichsignale nicht geeignet. Diese andere Konstruktion der Fig. 15 gegenüber dem Stand der Technik (Fig. 17) äußert sich unter anderem in dem anderen Vorzeichen gegenüber Fig. 17, mit dem das Integrationsergebnis in Fig. 15 in den Eingangspfad des Quantisierers (Ein-Bit-ADC 44) eingespeist wird.

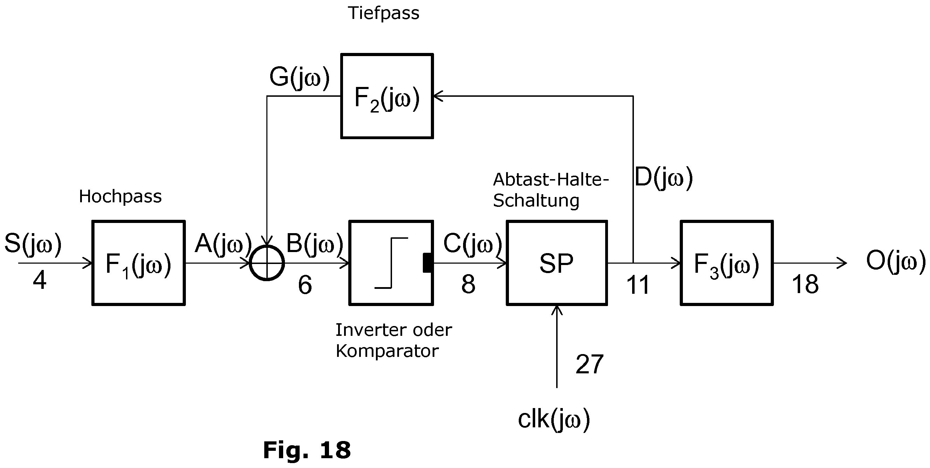

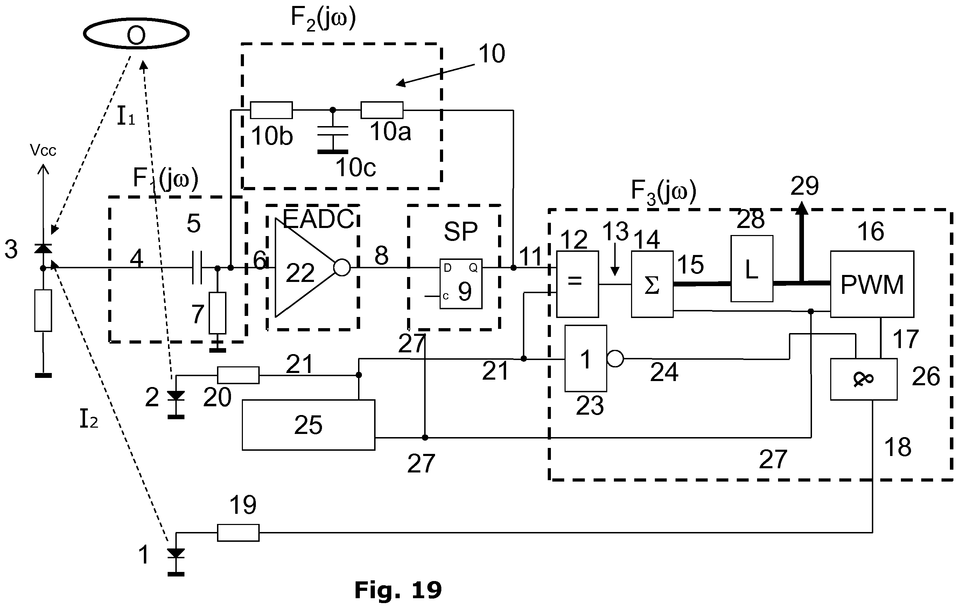

Anhand der Fign. 18 und 19 soll nachfolgend dargelegt werden, warum die Integration einer Sample & Hold-(Abtast-)Schaltung SP (in Fig. 1 realisiert als Synchronisations-Flip-Flop 9) hinter dem Eingangsverstärker (oder allgemein einen ADC) und vor der Rückkopplung zu einer Qualitätsverbesserung führt und welche Randbedingungen gelten.

Die Grundstruktur, in die der ADC gemäß Fig. 1 eingebettet ist, kann verallgemeinert und auf Blockschaltbildebene so angegeben werden, wie es in Fig. 18 dargestellt ist, wobei die Bezugszeichen 4,6,8,11,27 und 29, die in Fig. 18 angegeben sind, funktional den Elementen und Signalen entsprechen, die in Fig. 1 mit diesen Bezugszeichen gekennzeichnet sind.

Das Eingangssignal S(jω) wird mit einem ersten Filter $F_1(j\omega)$ zum Signal A(jω) gefiltert. Das Filter $F_1(j\omega)$ ist dabei typischerweise ein Hochpassfilter, kann aber auch ein anderes Filter sein, dass in der Umgebung von ω=OHZ sperrt. Es muss sich also mindestens um eine Bandsperre handeln, wobei die Frequenz 0Hz innerhalb des gesperrten Bandes liegen muss.

Zu dem gefilterten Eingangssignal A(jω) wird das Rückkoppelsignal G(jω) addiert. Es ergibt sich das Eingangssignal B(jω) des Ein-Bit-Analog-Zu-Digital-Wandlers. Dieses wird durch den Ein-Bit-Analog-Zu-Digital-Wandler (EADC) in einen sequentiellen Ein-Bit-Datenstrom C(jω) gewandelt. Das Ausgangssignal des Ein-Bit-Analog-Zu-Digital-Wandlers C(jω) entspricht dabei dem Eingangssignal B(jω) plus einem Fehlersignal e(jω). Dieses Ausgangssignal des Ein-Bit-Analog-Zu-Digital-Wandlers C(jω) wird dann in einer Abtastschaltung mit einem periodischen Sample-Signal clk(jω) abgetastet. Dies entspricht im Frequenzbereich einer Faltung. Es ergibt sich das Zwischenwertsignal D(jω).

Dieses Zwischenwertsignal D(jω) wird dann durch die zweite Filtereinheit $F_2$(jω) zum Rückkoppelsignal G(jω) gefiltert und der schon erwähnten Addition zugeführt.

Das Zwischenwertsignal D(jω) wird durch ein Ausgangsfilter $F_3$(jω) zum Ausgangssignal O(jω) gefiltert. Dieses Ausgangsfilter besteht aus einer Einheit zur Skalarproduktbildung zwischen dem Sendesignal 21 und dem digitalisierten Eingangssignal 11, D(jω). Es folgt wieder eine Multiplikation mit dem Sendesignal 21. Grobgesprochen handelt es sich um einen Synchrondemodulator gefolgt von einem Modulator. In der bereits offenbarten schematischen Schaltung besteht der Synchrondemodulator aus einem Multiplizierer (dem EXOR-Gatter 12) gefolgt von einem Integrierer (dem Up-Down-Counter 14 und dem Latch 28). Die PWM-Einheit 16 dient ausschließlich der Digital zu Analog-Wandlung. Der Modulator wird durch das UND-Gatter 26 repräsentiert, das eine Multiplikation zwischen dem Signal 21 und dem PWM-Ausgangssignal 17 erzeugt.

In Fig. 19 ist zeichnerisch dargestellt, welchen Komponenten der Schaltung nach Fig. 1 die Funktionsblöcke der Fig. 18 zuzuordnen sind.

Ein wesentliches Problem bei der Berechnung des Regelkreises stellt die richtige Modellierung des Sample & Hold Schaltkreises (SP) dar.

Wenn man voraussetzt, dass der Takt clk(t), der dem ursprünglichen Systemtakt 27 entspricht, wie folgt dargestellt werden kann:

$$clk(t) = \sum_{k=-\infty}^{\infty} \delta(t + T * k) \,.$$

So kann das Sample & Hold-Verhalten des Sample & Hold-Schaltkreises SP, der in der Schaltung nach Fig. 1 durch das Flip-Flop 9 dargestellt wurde, durch die Gleichung

$$D(t) = \int_{-\infty}^{t} \sum_{k=0}^{\infty} (C(t) - C(t-T)) \delta(t - kT) dt$$

dargestellt werden.

Das bedeutet, dass das Flip-Flop 9 bzw. der Sample & Hold-Schaltkreis SP eine Linearform darstellt, wobei genauer gesagt ein Skalar-Produkt aus der zeitlichen Ableitung des Systemtakts 27 bzw. dem Takt-Signal clk(t) und dem Signal am Inverter-Ausgang 8 bzw. C(t) des Ein-Bit-Analog-zu-Digital-Wandlers EADC bzw. des Komparators gebildet wird.

Dies bedeutet nichts andere, als dass nur solche Signaländerungen dieses Filter passieren, die synchron zu Flanken des Taktsignals clk(t) bzw. Systemtakts 27 sind. Typischerweise sind dies im Übrigen nur steigende oder nur fallende Flanken.

Es können nun ganz offensichtlich folgende Gleichungen für den Regelkreis aufgestellt werden:

$$A(j\omega) = S(j\omega)F_1(j\omega) \tag{1}$$

$$B(j\omega) = A(j\omega) + G(j\omega) \tag{2}$$

$$C(j\omega) = -B(j\omega) + e(j\omega) \tag{3}$$

$$D(j\omega) = \frac{1}{j\omega} \int_{-\infty}^{\infty} (1 - e^{-j\Omega T}) C(j\Omega) clk(j\omega - j\Omega) d\Omega \tag{4}$$

$$G(j\omega) = D(j\omega)F_2(j\omega) \tag{5}$$

$$O(j\omega) = D(j\omega)F_3(j\omega) \tag{6}$$

Mit diesen kann nun das System gelöst werden, wenn bestimmte Annahmen getroffen werden.

Man erhält für G(jω):

$$G(j\omega) = D(j\omega)F_2(j\omega) \tag{7}$$

Einsetzen der Gleichung 4 ergibt:

$$G(j\omega) = F_2(j\omega)\frac{1}{j\omega}\int_{-\infty}^{\infty}\left(1 - e^{-j\Omega T}\right)C(j\Omega)clk(j\omega - j\Omega)d\Omega \tag{8}$$

Einsetzen der Gleichung 3 ergibt wiederum:

$$G(j\omega) = F_2(j\omega)\frac{1}{j\omega}\int_{-\infty}^{\infty}\left(1 - e^{-j\Omega T}\right)e(j\Omega)clk(j\omega - j\Omega)d\Omega - F_2(j\omega)\frac{1}{j\omega}\int_{-\infty}^{\infty}\left(1 - e^{-j\Omega T}\right)B(j\Omega)clk(j\omega - j\Omega)d\Omega \tag{9}$$

Einsetzen der Gleichung 2 ergibt:

$$G(j\omega) = F_2(j\omega)\frac{1}{j\omega}\int_{-\infty}^{\infty}\left(1 - e^{-j\Omega T}\right)e(j\Omega)clk(j\omega - j\Omega)d\Omega$$

$$- F_2(j\omega)\frac{1}{j\omega}\int_{-\infty}^{\infty}\left(1 - e^{-j\Omega T}\right)A(j\Omega)clk(j\omega - j\Omega)d\Omega \tag{10}$$

$$- F_2(j\omega)\frac{1}{j\omega}\int_{-\infty}^{\infty}\left(1 - e^{-j\Omega T}\right)G(j\Omega)clk(j\omega - j\Omega)d\Omega$$

Betrachtet man nun G(jω) als aus zwei Teilen zusammengesetzt, nämlich aus einem ersten Teil $G_a$(jω), der durch die Faltung reproduziert wird, und einem zweiten Teil $G_b$(jω), der durch die Faltung eliminiert wird, so kann also definiert werden:

$$G(j\omega) = G_a(j\omega) + G_b(j\omega).$$

Dabei ist dann

$$\frac{1}{j\omega}\int_{-\infty}^{\infty}\left(1 - e^{-j\Omega T}\right)G(j\Omega)clk(j\omega - j\Omega)d\Omega =$$

$$\frac{1}{j\omega}\int_{-\infty}^{\infty}\left(1 - e^{-j\Omega T}\right)G_a(j\Omega)clk(j\omega - j\Omega)d\Omega + \frac{1}{j\omega}\int_{-\infty}^{\infty}\left(1 - e^{-j\Omega T}\right)G_b(j\Omega)clk(j\omega - j\Omega)d\Omega = G_a(j\omega) \tag{11}$$

$$\frac{1}{j\omega}\int_{-\infty}^{\infty}\left(1 - e^{-j\Omega T}\right)G_a(j\Omega)clk(j\omega - j\Omega)d\Omega = G_a(j\omega)$$

der Anteil von G(jω), der bezüglich des durch die Abtastung durchgeführten Skalar-Produkts mit den Flanken von clk(t) bzw. des Systemtakts 27 korreliert.

Damit ergibt sich für Gleichung 10:

$$G(j\omega) = G_a(j\omega) + G_b(j\omega) = F_2(j\omega)\frac{1}{j\omega}\int_{-\infty}^{\infty}\left(1 - e^{-j\Omega T}\right)e(j\Omega)clk(j\omega - j\Omega)d\Omega$$

$$- F_2(j\omega)\frac{1}{j\omega}\int_{-\infty}^{\infty}\left(1 - e^{-j\Omega T}\right)A(j\Omega)clk(j\omega - j\Omega)d\Omega - F_2(j\omega)G_a(j\omega) \qquad (12)$$

Das bedeutet, dass das Flip-Flop 9 bzw. die Sample & Hold-Schaltung SP wie ein Synchrondemodulator arbeitet.

Eine weitere Vereinfachung kann erreicht werden, wenn angenommen wird, dass das Eingangssignal A(j$\omega$) bzw. das Ausgangssignal 4 einen Signalanteil $A_a$(j$\omega$), der mit dem Taktsignal clk(t) bzw. Systemtakt 27 korreliert, und einen Störsignalanteil $A_b$(j$\omega$) aufweist, der mit dem Taktsignal clk(t) bzw. Systemtakt 27 nicht korreliert.

Außerdem sei vorausgesetzt, dass die Abtastung den Signalanteil $A_a$(j$\omega$) reproduziert, während der Störsignalanteil $A_b$(j$\omega$) unterdrückt wird, so dass also gilt:

$$G(j\omega) = G_a(j\omega) + G_b(j\omega) = F_2(j\omega)\frac{1}{j\omega}\int_{-\infty}^{\infty}\left(1 - e^{-j\Omega T}\right)e(j\Omega)clk(j\omega - j\Omega)d\Omega$$

$$- F_2(j\omega)A_a(j\omega) - F_2(j\omega)G_a(j\omega) \qquad (13)$$

Die Gleichung kann nun umgestellt werden:

$$\left[\left(\frac{1}{F_2(j\omega)} + 1\right)G_a(j\omega) + \frac{1}{F_2(j\omega)}G_b(j\omega)\right] + F_2(j\omega)A_a(j\omega) = +\frac{1}{j\omega}\int_{-\infty}^{\infty}\left(1 - e^{-j\Omega T}\right)e(j\Omega)clk(j\omega - j\Omega)d\Omega$$

$$(14)$$

Es sei nun zwischen zwei Fehlerfunktionen unterschieden, nämlich solche $e_a$(t), die mit clk(t) bzw. Systemtakt 27 bezüglich des Skalar-Produkts korrelieren, und solche $e_b$(t), die mit clk(t) bzw. Systemtakt 27 bezüglich des Skalar-Produkts nicht korrelieren.

Durch Koeffizientenvergleich ergeben sich die beiden Gleichungen:

$$\left(\frac{1}{F_2(j\omega)} + 1\right)G_a(j\omega) + F_2(j\omega)A_a(j\omega) = +\frac{1}{j\omega}\int_{-\infty}^{\infty}\left(1 - e^{-j\Omega T}\right)e_a(j\Omega)clk(j\omega - j\Omega)d\Omega \qquad (15)$$

$$\frac{1}{F_2(j\omega)}G_b(j\omega) = +\frac{1}{j\omega}\int_{-\infty}^{\infty}\left(1 - e^{-j\Omega T}\right)e_b(j\Omega)clk(j\omega - j\Omega)d\Omega \qquad (16)$$

Der rechte Term der Gleichung 16 muss per Definition Null sein, da ja $e_b$(t) nicht mit clk(t) bzw. Systemtakt 27 korreliert und damit ausgefiltert wird. Es gilt also:

$$\frac{1}{F_2(j\omega)}G_b(j\omega) = +\frac{1}{j\omega}\int_{-\infty}^{\infty}\left(1 - e^{-j\Omega T}\right)e_b(j\Omega)clk(j\omega - j\Omega)d\Omega = 0 \qquad (17)$$

Somit bleibt Gleichung 15:

$$\left(\frac{1}{F_2(j\omega)} + 1\right)G_a(j\omega) + F_2(j\omega)A_a(j\omega) = +\frac{1}{j\omega}\int_{-\infty}^{\infty}\left(1 - e^{-j\Omega T}\right)e_a(j\Omega)clk(j\omega - j\Omega)d\Omega \qquad (18)$$

Aufgrund der Definition von $e_a$(t) wird $e_a$(t) durch die Abtastung reproduziert und damit auch das Spektrum

$$\left(\frac{1}{F_2(j\omega)}+1\right)G_a(j\omega)+F_2(j\omega)A_a(j\omega)=e_a(j\omega) \tag{19}$$

Dies kann nach $G_a$(jω) aufgelöst werden:

$$G_a(j\omega)=\frac{F_2(j\omega)}{1+F_2(j\omega)}e_a(j\omega)-\frac{F_2(j\omega)^2}{1+F_2(j\omega)}A_a(j\omega) \tag{20}$$

Damit gilt aufgrund von Gleichung 2:

$$B(j\omega)=A(j\omega)+\frac{F_2(j\omega)}{1+F_2(j\omega)}e_a(j\omega)-\frac{F_2(j\omega)^2}{1+F_2(j\omega)}A_a(j\omega) \tag{21}$$

und damit aufgrund von Gleichung 3:

$$C(j\omega)=-A(j\omega)-\frac{F_2(j\omega)}{1+F_2(j\omega)}e_a(j\omega)+\frac{F_2(j\omega)^2}{1+F_2(j\omega)}A_a(j\omega)+e(j\omega) \tag{22}$$

Dies ist äquivalent zu:

$$C(j\omega)=-A_b(j\omega)-\frac{1+F_2(j\omega)-F_2(j\omega)^2}{1+F_2(j\omega)}A_a(j\omega)+\frac{1}{1+F_2(j\omega)}e_a(j\omega)+e_b(j\omega) \tag{23}$$

Dies kann nun in Gleichung 4 eingesetzt werden.

$$\begin{aligned}D(j\omega)=&-\frac{1}{j\omega}\int_{-\infty}^{\infty}\left(1-e^{-j\Omega T}\right)A_b(j\Omega)clk(j\omega-j\Omega)d\Omega\\&-\frac{1+F_2(j\omega)-F_2(j\omega)^2}{1+F_2(j\omega)}\frac{1}{j\omega}\int_{-\infty}^{\infty}\left(1-e^{-j\Omega T}\right)A_a(j\Omega)clk(j\omega-j\Omega)d\Omega\\&+\frac{1}{1+F_2(j\omega)}\frac{1}{j\omega}\int_{-\infty}^{\infty}\left(1-e^{-j\Omega T}\right)e_a(j\Omega)clk(j\omega-j\Omega)d\Omega\\&+\frac{1}{j\omega}\int_{-\infty}^{\infty}\left(1-e^{-j\Omega T}\right)e_b(j\Omega)clk(j\omega-j\Omega)d\Omega\end{aligned} \tag{24}$$

Aufgrund der zuvor getroffenen Definitionen von $A_b$(jω) und $e_b$(jω) gilt:

$$\frac{1}{j\omega}\int_{-\infty}^{\infty}\left(1-e^{-j\Omega T}\right)A_b\left(j\Omega\right)clk\left(j\omega-j\Omega\right)d\Omega=0$$

$$\frac{1}{j\omega}\int_{-\infty}^{\infty}\left(1-e^{-j\Omega T}\right)e_b\left(j\Omega\right)clk\left(j\omega-j\Omega\right)d\Omega=0 \tag{25}$$

Damit vereinfacht sich Gleichung 24 zu:

$$D\left(j\omega\right)=$$
$$-\frac{1+F_2\left(j\omega\right)-F_2\left(j\omega\right)^2}{1+F_2\left(j\omega\right)}\frac{1}{j\omega}\int_{-\infty}^{\infty}\left(1-e^{-j\omega T}\right)A_a\left(j\Omega\right)clk\left(j\omega-j\Omega\right)d\Omega$$
$$+\frac{1}{1+F_2\left(j\omega\right)}\frac{1}{j\omega}\int_{-\infty}^{\infty}\left(1-e^{-j\omega T}\right)e_a\left(j\Omega\right)clk\left(j\omega-j\Omega\right)d\Omega \tag{26}$$

Aufgrund der zuvor getroffenen Definitionen von $A_b$(j$\omega$) und $e_b$(j$\omega$) gilt:

$$\frac{1}{j\omega}\int_{-\infty}^{\infty}\left(1-e^{-j\Omega T}\right)A_a\left(j\Omega\right)clk\left(j\omega-j\Omega\right)d\Omega=A_a\left(j\omega\right)$$

$$\frac{1}{j\omega}\int_{-\infty}^{\infty}\left(1-e^{-j\Omega T}\right)e_a\left(j\Omega\right)clk\left(j\omega-j\Omega\right)d\Omega=e_a\left(j\omega\right) \tag{27}$$

Damit vereinfacht sich Gleichung 24 zu:

$$D\left(j\omega\right)=-\frac{1+F_2\left(j\omega\right)-F_2\left(j\omega\right)^2}{1+F_2\left(j\omega\right)}A_a\left(j\omega\right)+\frac{1}{1+F_2\left(j\omega\right)}e_a\left(j\omega\right) \tag{28}$$

und damit

$$O\left(j\omega\right)=-F_3\left(j\omega\right)\frac{1+F_2\left(j\omega\right)-F_2\left(j\omega\right)^2}{1+F_2\left(j\omega\right)}A_a\left(j\omega\right)+\frac{F_3\left(j\omega\right)}{1+F_2\left(j\omega\right)}e_a\left(j\omega\right) \tag{29}$$

Dies ist äquivalent zu:

$$O\left(j\omega\right)=-F_3\left(j\omega\right)\left[\frac{1-2+2+2F_2\left(j\omega\right)-F_2\left(j\omega\right)-F_2\left(j\omega\right)^2}{1+F_2\left(j\omega\right)}\right]A_a\left(j\omega\right)+\frac{F_3\left(j\omega\right)}{1+F_2\left(j\omega\right)}e_a\left(j\omega\right) \tag{30}$$

$$O\left(j\omega\right)=-F_3\left(j\omega\right)\left[-\frac{1}{1+F_2\left(j\omega\right)}+2-F_2\left(j\omega\right)\right]A_a\left(j\omega\right)+\frac{F_3\left(j\omega\right)}{1+F_2\left(j\omega\right)}e_a\left(j\omega\right) \tag{31}$$

$$O\left(j\omega\right)=-F_3\left(j\omega\right)\left[-\frac{1}{1+F_2\left(j\omega\right)}+2-F_2\left(j\omega\right)\right]F_1\left(j\omega\right)S_a\left(j\omega\right)+\frac{F_3\left(j\omega\right)}{1+F_2\left(j\omega\right)}e_a\left(j\omega\right) \tag{32}$$

Das Eingangssignal $S_a(j\omega)$ sei monofrequent mit einer Frequenz $\omega_0$.

Wird weiter gefordert, dass

$$F_3(j\omega)F_1(j\omega)S_a(j\omega) = S_a(j\omega) \tag{33}$$

$$F_2(j\omega)F_1(j\omega)S_a(j\omega) = 0 \tag{34}$$

Dies bedeutet, dass für die Grenzfrequenzen gilt:

$$\omega_3 > \omega_0 > \omega_1 \text{ und } \omega_0 > \omega_2 \tag{35}$$

So wird erreicht, dass

$$O(j\omega) = \left[\frac{1}{1+F_2(j\omega)} - 2\right]S_a(j\omega) + \frac{F_3(j\omega)}{1+F_2(j\omega)}e_a(j\omega) \tag{36}$$

Da

$$\omega_3 > \omega_0 > \omega_2 \tag{37}$$

gelten muss, ergibt der Term

$$\frac{F_3(j\omega)}{1+F_2(j\omega)} \tag{38}$$

einen Bandpass.

Somit wird $e_a(j\omega)$ auf die Anteile des Fehlers beschränkt, die der Bandpass durchlässt.

Damit das System funktioniert, müssen folgende Bedingungen erfüllt sein:

1. Das Nutzsignal $S_a(j\omega)$ sei monofrequent mit einer Frequenz $\omega_0$ oder bandbegrenzt mit einer unteren Grenzfrequenz $\omega_{0u}$ und mit einer oberen Grenzfrequenz $\omega_{0o}$.
2. Das Nutzsignal $S_a(j\omega)$ muss bezüglich der Abtastung die Eigenschaft haben, dass

$$\frac{1}{j\omega}\int_{-\infty}^{\infty}\left(1-e^{-j\Omega T}\right)S_a(j\Omega)clk(j\omega - j\Omega)d\Omega = S_a(j\omega)$$

oder im Zeitbereich gilt:

$$\int_{-\infty}^{\infty}\sum_{k=-\infty}^{\infty}\left(S_a(t) - S_a\left(t - \frac{1}{T}\right)\right)\delta\left(t - k\frac{1}{T}\right)dt = S_a(t)$$

Das bedeutet, dass die Abtastung das Nutzsignal nicht ändert.

3. Das Filter $F_1(j\omega)$ ist zumindest ein Hochpassfilter mit der Grenzfrequenz $\omega_1$.
4. Das Filter $F_2(j\omega)$ ist zumindest ein Tiefpassfilter mit der Grenzfrequenz $\omega_2$.
5. Das Filter $F_3(j\omega)$ ist zumindest ein Tiefpassfilter mit der Grenzfrequenz $\omega_3$.
6. $\omega_3 > \omega_{0o} > \omega_{0u} > \omega_1$

7. $\omega_3 > \omega_{0o} > \omega_{0u} > \omega_2$

Offensichtlich ist die Wahl $\omega_1 = \omega_2$ möglich.

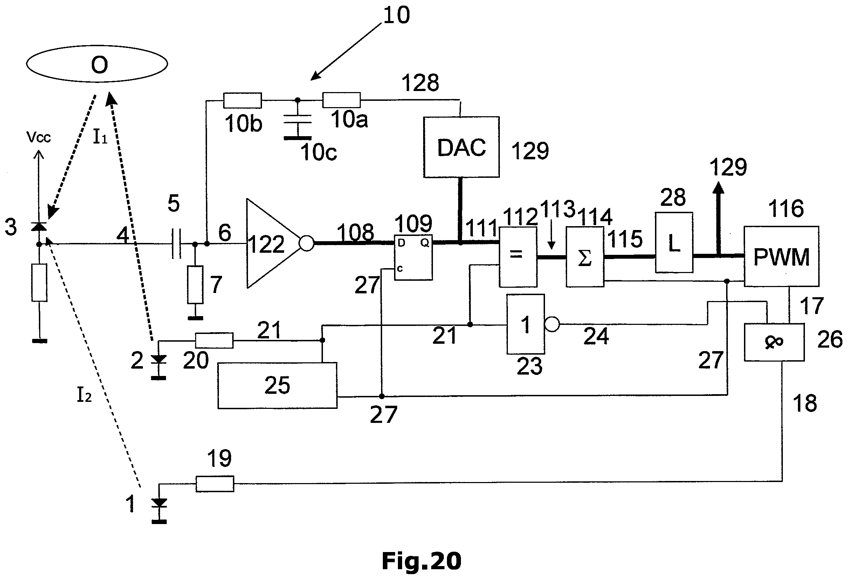

In Fig. 20 ist ein Ausführungsbeispiel gezeigt, bei dem anstelle des Ein-Bit-ADC gemäß Fign. 18 und 20 ein Mehr-Bit-ADC verwendet wird.

Der Mehr-Bit-Analog-Digital-Wandler 122 wandelt das Signal am Eingang 6 in ein digitales Signal 108 mit größerer Breite als ein Bit um. Dieses digitale Signal 108 am Ausgang des Mehr-Bit-Analog-Digital-Wandlers 122 sollte vorzugsweise komplementärzahlkodiert sein. Das bedeutet, dass alle Bits dieses Busses 0 sind, wenn das Signal am Inverter-Eingang 6 einen mittleren Schwellenwert hat. Ist das Signal am Eingang 6 minimal, also typischerweise 0, so sind alle Bits des Signals 108 auf 1 gesetzt. Ist das Signal am Eingang 6 größer als der oder gleich dem Maximalwert, so sind alle Bits des Signals 108 bis auf das MSB ebenfalls auf 1 gesetzt. Das MSB ist jedoch weiterhin auf 0.

Die Bits des Signals 108 sind jedes für sich mit einem Flip-Flop verbunden. Diese Flip-Flops bilden zusammen ein Register 109. In diesem Register 109 wird das Signal 108 abgetastet. Die Abtastung wird dabei typischerweise durch eine Flanke des Systemtakts 27 veranlasst. Hierdurch kommt es wieder zu der Bildung des besagten Skalar-Produkts zwischen der zeitlichen Ableitung des Systemtakts 27 und dem Signal des Ausgangsbusses 108. Der gespeicherte Signalbus 111 wird auf einen Digital- Analog-Wandler DAC 129 geleitet und von diesem zu einem Rückkoppelsignal 128 zurückgewandelt, das wie bisher über den Tiefpass 10a,10b,10c auf den Eingang des Analog-zu-Digital-Wandlers 122 summierend zurückgeführt wird.

Wichtig ist dabei, dass der DAC 129 eine mittlere Spannung liefert, wenn alle seine Eingänge, also alle Signale des gespeicherten Signalbusses 111, auf 0 sind.

Jeder der Leitungen des gespeicherten Signalbusses 111 ist mit jeweils einem Eingang jeweils eines EXOR-Gatters verbunden. Diese EXOR-Gatter bilden zusammen einen EXOR-Gatter-Block 112. Jedes der Gatter ist dabei mit einem zweiten Eingang mit dem Sendesignal 21 verbunden. Dadurch toggelt wieder das Sendesignal 21 die Signale des gespeicherten Signalbusses 111. Dies ist nahezu äquivalent mit einer Multiplikation mit -1 und 1, je nach logischem Wert des Sendesignals 21.

Genau genommen wird die Drehung jedoch nicht um 0 sondern um -0,5 durchgeführt, was aber für die meisten Anwendungen nicht relevant ist.

Das bedeutet, dass der EXOR-Gatter-Block 112 das Sendesignal 21 mit dem digitalisierten Eingangssignal, mittels des gespeicherten Signalbusses 111 multipliziert.

Das so erhaltene ausmultiplizierte Signal 113 entspricht immer noch einer Komplementzahl.

Dieses ausmultiplizierte Signal 113 wird nun mit jedem Takt durch einen digitalen Integrator 114 zu dessen Inhalt hinzuaddiert. Dessen Ausgang, also das Integratorausgangssignal 115, ist im Gegensatz zum bisher beschriebenen Ausgangssignal 15 ebenfalls eine Komplementzahl. Dieses Integratorausgangssignal 115 wird wieder in einem Register 28 zwischengespeichert und durch eine PWM-Einheit 116 umgesetzt. Der Unterschied zu der bisher besprochenen PWM-Einheit 16 ist, dass die PWM-Einheit 116, wenn alle Signale des DAC 129 Null sind, immer noch einen mittleren Pegel als Ausgangssignal 17 ausgibt, während bei der bisher beschriebenen Lösung in diesem Fall die alte PWM-Einheit 16 Null ausgeben würde.

Der Vorteil der Verwendung eines Mehr-Bit-ADC ist der verringerte Digitalisierungsfehler $e(j\omega)$. Eine solche Lösung eignet sich daher besonders dann, wenn höhere Genauigkeiten notwendig sind.

## BEZUGSZEICHENLISTE

| | |
|---|---|
| 1 | Kompensationssignalsender (z.B. LED) |
| 2 | Sender (z.B. LED) |
| 3 | Empfänger (z.B. Fotodiode) |
| 4 | analoges Ausgangs-(Mess-)Signal des Empfängers |
| 5 | Koppelkondensator |
| 6 | Inverter-Eingang |
| 7 | Ableitwiderstand |
| 8 | Inverter-Ausgang |
| 9 | D-Flip-Flop |
| 10 | Dezimationsfilter als Tiefpassfilter für die PWM-Frequenzen |
| 10a | erster Widerstand des Dezimationsfilters |
| 10b | Kondensator des Dezimationsfilters |
| 10c | zweiter Widerstand des Dezimationsfilters |
| 11 | Inverter-Ausgangssignal |

12    EXOR-Gatter zur Multiplikation des Sendesignals 21 mit dem Inverter-Ausgangssignal 11. Dabei werden die logischen Pegel des Sendesignals 21 beispielsweise mit 1 für den High-Pegel und -1 für den Low-Pegel bewertet.

13    multipliziertes Empfängerausgangssignal

14    UP-Down-Counter (dieser zählt aufwärts, wenn das multiplizierte Empfängerausgangssignal 13 high ist, und abwärts, wenn es low ist)

15    Ausgangssignal (Zählerstand) des Up-Down-Counters

16    PWM-Einheit zur Erzeugung des Füllgrades des Kompensationssignals 18

17    Ausgangssignal der PWM-Einheit (16)

18    Kompensationssendesignal (Multiplikation des PWM-Ausgangssignals mit dem invertierten Sendesignal 24)

19    Vorwiderstand zum Treiben des Kompensationssignalsenders 1 mit dem Kompensationssendesignal 18

20    Vorwiderstand zum Treiben des Nutzsignalsenders 2 mit dem Sendesignal 21

21    Sendesignal (Ansteuersignal für den Nutzsignalsender)

21a   erstes Sendesignal

21b   zweites Sendesignal

22    Inverter (Eingangsverstärker)

23    Inverter zur Erzeugung des invertierten Ausgangssignals 24 aus dem Sendesignal 21

24    invertiertes Sendesignal (invertierte Version des Signals 21)

25    zentrale Steuereinheit und Signalgenerator

26    UND-Gatter zur Multiplikation des PWM-Ausgangssignals 17 mit dem invertierten Sendesignal 24

27    Systemtakt

28    Register zum Zwischenspeichern des Zählerstandes des Up-Down-Counters (dieses Zwischenspeichern findet immer mit dem letzten Takt einer PWM-Periode statt)

29    Ausgangswert (Messwert) des Systems als Skalarprodukergebnissignal (der Ausgangswert umfasst in der Regel nur die höheren Bits des im Register 28 gespeicherten Zählerstandes)

30    Steuersignal zum Speichern des Wertes des UP/Down-Counters im letzten Systemtakt einer PWM-Periode 33

31    Rücktransformierter Datenbus

31a   erster Kompensationsdatenstrom (rücktransformierter Datenbus)

31b   zweiter Kompensationsdatenstrom (rücktransformierter Datenbus)

32    PWM-Periode

32a   erste PWM-Periode einer beispielhaften Sendesignalperiode 33

32b   zweite PWM-Periode einer beispielhaften Sendesignalperiode 33

32c   dritte PWM-Periode einer beispielhaften Sendesignalperiode 33

32d   vierte PWM-Periode einer beispielhaften Sendesignalperiode 33

33    Transmissions-Periode des Sendesignals 21

33a   vorausgehende Sendesignalperiode

33b   nachfolgende Sendesignalperiode

35    Rücktransformierter Datenstrom

37    analoges Kompensationssendesignal

39    Einheit zur Bestimmung eines Fourier-Koeffizienten durch Bildung eines Skalarproduktes und zur anschließenden Rücktransformation

40    Einheit zur Bestimmung eines Fourier-Koeffizienten durch Bildung eines Skalarproduktes und zur anschließenden Rücktransformation, wobei diese Einheit keine eigene PWM-Eigenschaften mehr aufweist

40a   erste Einheit zur Bestimmung eines Fourier-Koeffizienten durch Bildung eines Skalarproduktes mit und zur anschließenden Rücktransformation

40b   zweite Einheit zur Bestimmung eines Fourier-Koeffizienten durch Bildung eines Skalarproduktes mit und zur anschließenden Rücktransformation

41    alternatives Dezimationsfilter

42    Zwischenbus für die Orthogonalisierung

43    Rückkopplungssignal

44    idealer Ein-Bit-ADC

46    Filterung

100   Sender

108   digitales Signal des Ausgangsbus

109   Register

111   Signalbus

112   EXOR-Gatter-Block

113   Multiplikationssignal

115   Integrator-Ausgangssignal

116  PWM-Einheit
128  Rückkoppelsignal
129  DAC

**Patentansprüche**

**1.** Vorrichtung zur Bestimmung mindestens einer Eigenschaft eines Drahtlos-Übertragungskanals ($I_1$,$I_2$) zwischen einem Nutzsignalsender (2) zum Senden eines binären Nutzsignals sowie einem Kompensationssignalsender (1) zum Senden eines binären Kompensationssignals einerseits und einem Empfänger (3) andererseits, wobei der Übertragungskanal eine hinsichtlich ihrer Eigenschaften zu bestimmende erste Übertragungsstrecke ($I_1$) zwischen dem Nutzsignalsender (2) und dem Empfänger (3) und eine hinsichtlich ihrer Eigenschaften bekannte zweite Übertragungsstrecke ($I_2$) zwischen dem Kompensationssignalsender (1) und dem Empfänger (3) aufweist und wobei der Nutzsignalsender (2) und der Kompensationssignalsender (1) getaktet betreibbar sind, mit

- einem Ein-Bit-Analog-Digital-Wandler (22,9,10a,10b,10c), der einen über den Empfänger (3) mit dem Nutzsignalsender (2) gekoppelten Eingang (6) und einen Ausgang (11) zur Lieferung eines digitalen Signals aufweist,
- wobei der Ein-Bit-Analog-Digital-Wandler (22,9,10a,10b,10c) einen eine Schaltschwelle aufweisenden Inverter (22) mit einem mit dem Eingang des Ein-Bit-Analog-Digital-Wandlers (22,9,10a,10b,10c) gekoppelten Invertereingang (6) sowie einen mit dem Ausgang (11) des Ein-Bit-Analog-Digital-Wandlers (22,9,10a,10b,10c) gekoppelten Inverterausgang, ein Tiefpassfilter (10a,10b,10c) zur Rückkopplung des Ausgangs (11) des Ein-Bit-Analog-Digital-Wandlers (22,9,10a,10b,10c) zum Invertereingang und ein Hochpassfilter, insbesondere in Form eines Kondensators (5), zwischen dem Eingang des Ein-Bit-Analog-Digital-Wandlers (22,9,10a,10b,10c) und dem Invertereingang aufweist,
- einer Skalarprodukteinheit, die eine Multiplikationseinheit zur Ermittlung des Produkts zwischen dem Ausgangssignal des Ein-Bit-Analog-Digital-Wandlers (22,9,10a,10b,10c) und einem binären Ansteuersignal (21) für den Nutzsignalsender (2) und ein Filter (14) mit integrierendem Filtereffekt zur Bildung des Skalarproduktergebnissignals (15) aufweist,
- wobei die Multiplikationseinheit (26) ein EXOR-Gatter (12) zur Multiplikation des Ein-Bit-Ausgangssignals am Ausgang (11) des Ein-Bit-Analog-Digital-Wandlers (22,9,10a,10b,10c) mit dem Ansteuersignal (21) für den Nutzsignalsender (2) aufweist,
- einer weiteren Multiplikationseinheit (26) zur Multiplikation des Ausgangssignals (15 oder 29) des Filters (14) mit einem zweiten Signal (24), das gleich dem logisch invertierten Ansteuersignal (21) für den Nutzsignalsender (2) ist, und
- einer Kompensationssignal-Erzeugungseinheit zur Erzeugung eines binären Ansteuersignals für den Kompensationssignalsender (1) zum Senden des Kompensationssignals über die zweite Übertragungsstrecke ($I_2$) zum Empfänger (3), bei dem sich das Kompensationssignal und das Nutzsignal zu einem Gleichsignal überlagern,
- wobei die Kompensationssignal-Erzeugungseinheit einen Digital-Analog-Wandler (16) zur Umsetzung des mit dem zweiten Signal (24) multiplizierten Filterausgangssignals (15 oder 29) in ein Analog-Signal als Ansteuersignal für den Kompensationssignalsender (1) aufweist und
- wobei die Eigenschaft der ersten Übertragungsstrecke ($I_1$) anhand des Skalarproduktergebnissignals (15) ermittelbar ist.

**2.** Vorrichtung nach Anspruch 1, **dadurch gekennzeichnet, dass** der Analog-Digital-Wandler eine getaktete Abtast-Halte-Schaltung (9), insbesondere in Form eines Flip-Flops, aufweist, die mit einem Mehrfachen derjenigen Taktfrequenz betreibbar ist, mit der die digitale Signalverarbeitung erfolgt.

**3.** Vorrichtung nach Anspruch 1 oder 2, **dadurch gekennzeichnet, dass** der Kompensationssignalsender (1) ein Tiefpassverhalten aufweist und dass der Digital-Analog-Wandler (16) eine PWM-Einheit (16) zur Umsetzung des Skalarproduktergebnissignals (15 oder 29) in ein PWM-Signal (17) und die Multiplikationseinheit (26) zur Multiplikation des Ausgangssignals (17) der PWM-Einheit (16) mit dem zweiten Signal (24) und den Kompensationssignalsender (1) aufweist.

**4.** Vorrichtung nach einem der Ansprüche 1 bis 3, **dadurch gekennzeichnet, dass** der Ein-Bit-Analog-Digital-Wandler (22,9,10a,10b,10c) zwischen seinem Ausgang (11) und seinem Eingang (6) einen Rückkopplungspfad zur Rückkopplung des Ausgangs (11) zum Invertereingang und einen Einkopplungspfad für das vom Empfänger (3) kommende Eingangssignal (4) aufweist, wobei

- das Rückkoppelsignal (43) mit einem Faktor (k1) multipliziert dem Eingangssignal (4, in) hinzuaddiert wird,
- das Rückkoppelsignal (43) mit einem Faktor (k2) multipliziert sowie integriert und zu dem Eingangssignal hinzuaddiert wird,
- das Eingangssignal (4, in) und diese beiden Summandensignale mit einem Faktor (k4) multipliziert sowie integriert und von dem Eingangssignal (4, in) abgezogen werden, wobei das Ergebnis dieser Subtraktion selbst wieder mit einem Faktor (k4) multipliziert sowie integriert und von sich selbst abgezogen wird, und
- das Gesamtergebnis nach Multiplikation mit einem Faktor (k3) das Eingangssignal (4, in) für den Ein-Bit-Analog-Digital-Wandler (22,9,10a,10b,10c) des Systems bildet.

5. Vorrichtung nach einem der Ansprüche 1 bis 4, **gekennzeichnet durch** einen Up-Down-Counter (14) zur Integration des Produkts (13) zur Bildung des Skalar-Produkts der Skalarprodukteinheit (12,13,14).

6. Vorrichtung nach einem der Ansprüche 1 bis 5, **dadurch gekennzeichnet, dass** der Nutzsignalsender (2), der Kompensationssignalsender (1) und der Empfänger (3) optisch, kapazitiv oder induktiv arbeiten.

## Claims

1. A device for determining at least one feature of a wireless transmission channel $(I_1,I_2)$ between on the one hand a useful signal transmitter (2) for transmitting a binary useful signal and a compensation signal transmitter (1) for transmitting a binary compensation signal and on the hand a receiver (3), wherein the transmission channel comprises a first transmission path $(I_1)$ to be determined in terms of its features between the useful signal transmitter (2) and the receiver (3), and a second transmission path $(I_2)$ known in terms of its features, and wherein the useful signal transmitter (2) and the compensation signal transmitter (1) are operable in a clocked manner, comprising

- a one-bit-analog-to-digital-converter (22,9,10a,10b,10c) which comprises an input (6) coupled via the receiver (3) to the useful signal transmitter (2) and an output (11) for delivering a digital signal,
- wherein the one-bit-analog-to-digital-converter (22,9,10a,10b,10c) comprises an inverter (22) having a switching threshold and having an inverter input (6) coupled to the input of the one-bit-analog-to-digital-converter (22,9,10a,10b,10c) as well as an inverter output coupled to the output (11) of the one-bit-analog-to-digital-converter (22,9,10a, 10b,10c), a low-pass filter (10a,10b,10c) for feeding back the output (11) of the one-bit-analog-to-digital-converter (22,9,10a,10b, 10c) to the inverter input, and a high-pass filter, particularly in form of a capacitor (5), between the input of the one-bit-analog-to-digital-converter (22,9,10a,10b,10c) and the inverter input,
- a scalar product unit which comprises a multiplication unit for determining the product between the output signal of the one-bit-analog-to-digital-converter (22,9,10a,10b,10c) and a binary control signal (21) for the useful signal transmitter (2), and a filter (14) with integrating filter effect for forming the scalar product result signal (15),
- wherein the multiplication unit (26) comprises an EXOR gate (12) for multiplication of the one-bit output signal at the output (11) of the one-bit-analog-to-digital-converter (22,9,10a,10b, 10c) with the control signal (21) for the useful signal transmitter (2),
- a further multiplication unit (26) for multiplication of the output signal (15 or 29) of the filter (14) with a second signal (24) which is equal to the logically inverted control signal (21) for the useful signal transmitter (2), and
- a compensation signal generation unit for generating a binary control signal for the compensation signal transmitter (1) for transmitting the compensation signal via the second transmission path $(I_2)$ to the receiver (3) where the compensation signal and the useful signal overlap to an equal signal,
- wherein the compensation signal generation unit comprises a digital-to-analog-converter (16) for converting the filter output signal (15 or 29) multiplied with the second signal (24) into an analog signal as a control signal for the compensation signal transmitter (1), and
- wherein the feature of the first transmission path $(I_1)$ is determinable by means of the scalar product result signal (15).

2. The device according to claim 1, **characterized in that** the analog-to-digital-converter comprises a clocked sample-and-hold circuit (9), particularly in form of a flip-flop, which is operable with a multiple of the clock frequency being used for digital signal processing.

3. The device according to claim 1 or 2, **characterized in that** the compensation signal transmitter (1) comprises a low-pass behavior, and that the digital-to-analog-converter (16) comprises a PMW unit (16) for converting the scalar product result signal (15 or 29) into a PMW signal (17), and comprises the multiplication unit (26) for multiplying the output signal (17) of the PMW unit (16) with the second signal (24), and the compensation signal transmitter (1).

4. The device according to any one of claims 1 to 3, **characterized in that** the one-bit-analog-to-digital-converter (22,9,10a,10b,10c) comprises between its output (11) and its input (6) a feedback path for feeding back the output (11) to the inverter input, and a coupling path for the input signal (4) from the receiver (3), wherein

- the feedback signal (43) multiplied with a factor (k1) is added up to the input signal (4, in),
- the feedback signal (43) multiplied and integrated with a factor (k2) is added up to the input signal,
- the input signal (4, in) and said two summand signals are multiplied and integrated with a factor (k4) and subtracted from the input signal (4, in), wherein the result of said subtraction is itself again multiplied and integrated with a factor (k4) and subtracted from the result itself, and
- the total result after multiplication with a factor (k3) forms the input signal (4, in) for the one-bit-analog-to-digital-converter (22,9, 10a,10b, 10c) of the system.

5. The device according to any one of claims 1 to 4, **characterized by** an up/down counter (14) for the integration of the product (13) for forming the scalar product of the scalar product unit (12,13,14).

6. The device according to any one of claims 1 to 5, **characterized in that** the useful signal transmitter (2), the compensation signal transmitter (1) and the receiver (3) operate optically, capacitively or inductively.

**Revendications**

1. Dispositif de détermination d'au moins une propriété d'un canal de transmission sans fil ($I_1$, $I_2$) entre d'une part un émetteur de signal utile (2) destiné à émettre un signal utile binaire, ainsi qu'un émetteur de signal de compensation (1) destiné à émettre un signal de compensation binaire, et d'autre part un récepteur (3), le canal de transmission comportant un premier chemin de transmission ($I_1$), à déterminer quant à ses propriétés, entre l'émetteur de signal utile (2) et le récepteur (3) et un deuxième chemin de transmission ($I_2$), connu quant à ses propriétés, entre l'émetteur de signal de compensation (1) et le récepteur (3) et l'émetteur de signal utile (2) et l'émetteur de signal de compensation (1) pouvant être exploités de manière cadencée, ledit dispositif comprenant

- un convertisseur analogique-numérique à un bit (22, 9, 10a, 10b, 10c) qui comporte une entrée (6) couplée à l'émetteur de signal utile (2) par le biais du récepteur (3) et une sortie (11) destinée délivrer un signal numérique,
- le convertisseur analogique-numérique à un bit (22, 9, 10a, 10b, 10c) comportant un inverseur (22), qui est pourvu d'un seuil de commutation et qui comporte une entrée (6) couplée à l'entrée du convertisseur analogique-numérique à un bit (22, 9, 10a, 10b, 10c) et une sortie couplée à la sortie (11) du convertisseur analogique-numérique à un bit (22, 9, 10a, 10b, 10c), un filtre passe-bas (10a, 10b, 10c) destiné renvoyer la sortie (11) du convertisseur analogique-numérique à un bit (22, 9, 10a, 10b, 10c) à l'entrée de l'inverseur et un filtre passe-haut, se présentant en particulier sous la forme d'un condensateur (5), entre l'entrée du convertisseur analogique-numérique à un bit (22, 9, 10a, 10b, 10c) et l'entrée de l'inverseur,
- une unité de produit scalaire qui comporte une unité de multiplication destinée à déterminer le produit entre le signal de sortie du convertisseur analogique-numérique à un bit (22, 9, 10a, 10b, 10c) et un signal de commande binaire (21) destiné à l'émetteur de signal utile (2) et un filtre (14) ayant un effet de filtre intégrant pour former le signal de résultat de produit scalaire (15),
- l'unité de multiplication (26) comportant une porte EXOR (12) destinée à multiplier le signal de sortie à un bit à la sortie (11) du convertisseur analogique-numérique à un bit (22, 9, 10a, 10b, 10c) par le signal de commande (21) destiné à l'émetteur de signal utile (2),
- une autre unité de multiplication (26) destinée à multiplier le signal de sortie (15 ou 29) du filtre (14) par un deuxième signal (24) qui est le même que le signal de commande (21) inversé logiquement destiné à l'émetteur de signal utile (2), et
- une unité de génération de signal de compensation destiné à générer un signal de commande binaire destiné l'émetteur de signal de compensation (1) pour émettre le signal de compensation sur le deuxième chemin de transmission ($I_2$) en direction du récepteur (3) dans lequel le signal de compensation et le signal utile se superposent pour former un signal d'égalité,
- l'unité de génération de signal de compensation comportant un convertisseur analogique-numérique (16) destiné à convertir le signal de sortie de filtre (15 ou 29), multiplié par le deuxième signal (24), en un signal analogique servant de signal de commande destiné à l'émetteur de signal de compensation (1) et
- la propriété du premier chemin de transmission ($I_1$) pouvant être déterminée sur la base du signal de résultat de produit scalaire (15).

2. Dispositif selon la revendication 1, **caractérisé en ce que** le convertisseur analogique-numérique comporte un circuit échantillonneur-bloqueur (9) cadencé, se présentant notamment sous la forme d'une bascule qui peut fonctionner à un multiple de la fréquence d'horloge avec laquelle le traitement de signal numérique est effectué.

3. Dispositif selon la revendication 1 ou 2, **caractérisé en ce que** l'émetteur de signal de compensation (1) a un comportement de type passe-bas et **en ce que** le convertisseur numérique-analogique (16) comporte une unité PWM (16) destinée convertir le signal de résultat de produit scalaire (15 ou 29) en un signal PWM (17) et l'unité de multiplication (26) destinée à multiplier le signal de sortie (17) de l'unité PWM (16) avec le deuxième signal (24) et l'émetteur de signal de compensation (1).

4. Dispositif selon l'une des revendications 1 à 3, **caractérisé en ce que** le convertisseur analogique-numérique à un bit (22, 9, 10a, 10b, 10c) comporte entre sa sortie (11) et son entrée (6) un chemin de rétroaction destinée à effectuer une rétraction de la sortie (11) vers l'entrée de l'inverseur et un chemin d'injection destiné au signal d'entrée (4) provenant du récepteur (3),

    - le signal de rétroaction (43) étant multiplié par un facteur (k1) et ajouté au signal d'entrée (4, in),
    - le signal de rétroaction (43) étant multiplié par un facteur (k2), intégré et ajouté au signal d'entrée,
    - le signal d'entrée (4, in) et ces deux signaux de sommation étant multipliés par un facteur (k4), intégrés et soustraits du signal d'entrée (4, in), le résultat de cette soustraction étant lui-même à nouveau multiplié par un facteur (k4), intégré et soustrait de lui-même, et
    - le résultat global formant, après multiplication par un facteur (k3), le signal d'entrée (4, in) destiné au convertisseur analogique-numérique à un bit (22, 9, 10a, 10b, 10c) du système.

5. Dispositif selon l'une des revendications 1 à 4, **caractérisé par** un compteur décompteur (14) destiné à intégrer le produit (13) pour former le produit scalaire de l'unité de produit scalaire (12, 13, 14).

6. Dispositif selon l'une des revendications 1 à 5, **caractérisé en ce que** l'émetteur de signal utile (2), l'émetteur de signal de compensation (1) et le récepteur (3) fonctionnent de manière optique, capacitive ou inductive.

**Fig. 1**

Fig. 2

**Fig. 3**

EP 2 936 201 B1

Fig. 4

**Fig. 5**

EP 2 936 201 B1

**Fig. 6**

DAC — 37

35

36

add

29_1 31_1
29_2 31_2
29_3 31_3
29_n 31_n

40_1
40_2
40_3
40_4

11
30
27
21_1
21_2
21_3
21_n

**Fig. 7**

EP 2 936 201 B1

**Fig. 8**

EP 2 936 201 B1

**Fig. 9**

EP 2 936 201 B1

Fig. 10

Fig. 11

**Fig. 12**

**Fig. 13**

Fig. 14

Fig. 15

Fig. 16

**Fig. 17**

($\Delta$ - $\Sigma$ - Wandler nach dem Stand der Technik)

Hochpass

Tiefpass

Abtast-Halte-
Schaltung

Inverter oder
Komparator

$S(j\omega)$
4

$F_1(j\omega)$

$A(j\omega)$

$B(j\omega)$
6

$G(j\omega)$

$F_2(j\omega)$

$D(j\omega)$

$C(j\omega)$
8

SP

clk$(j\omega)$
27

11

$F_3(j\omega)$
18

$O(j\omega)$

**Fig. 18**

**Fig. 19**

EP 2 936 201 B1

Fig.20

**Fig.21**

(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 706648 B
- EP 1913420 B
- DE 10300223 B
- DE 102010028967 A
- US 20090237282 A
- EP 2109018 A
- EP 2631674 A

**In der Beschreibung aufgeführte Nicht-Patentliteratur**

- Some Alternative Structures. **S. NORSWORTHY ; R. SCHREIER ; G. TEMES.** Delta-Sigma-Converters. IEEE Press, 1996, 23